# EUROPEAN PATENT APPLICATION

(11) **EP 4 387 145 A1**
(43) Date of publication of application: **19.06.2024**
(21) Application number: 22863048.9
(22) Date of filing: 09.08.2022
(51) Int. Cl.: H04L 5/00

(54) **NDPA FRAME TRANSMISSION METHOD AND RELATED APPARATUS**

(30) Priority: 28.08.2021 CN 202110999083
(71) Applicant: Huawei Technologies Co., Ltd., Shenzhen, Guangdong 518129 (CN)
(72) Inventor: YU, Jian, Shenzhen, Guangdong 518129 (CN); SUH, Jung Hoon, Shenzhen, Guangdong 518129 (CN); GUO, Yuchen, Shenzhen, Guangdong 518129 (CN); GAN, Ming, Shenzhen, Guangdong 518129 (CN)
(74) Representative: Grünecker Patent- und Rechtsanwälte PartG mbB
(86) International application number: PCT/CN2022/111170
(87) International publication number: WO 2023/029907

(57) **Abstract**

This application relates to the field of wireless communication, and is applied to a wireless local area network supporting 802.11 series standards, and in particular, to an NDPA frame transmission method and a related apparatus. The method includes: A beamformer (for example, an AP) generates and sends a universal NDPA frame, where an NDPA variant field (namely, B0 and B1 in a sounding dialog token field) included in the universal NDPA frame is set to any one of 00, 01, 10, and 11, and every two octets following the sounding dialog token field in the universal NDPA frame include one AID 11 or one disambiguation bit. If the AID 11 is in a station information field, the AID 11 is less than or equal to 2007; or if the AID 11 is in an extended common field, the AID 11 is greater than 2007. The disambiguation bit is forcibly set to 1. Embodiments of this application can be applied to a future 802.11 standard to support channel sounding, and can further prevent a STA of an earlier version from misreading.

## Description

This application claims priority to Chinese Patent Application No. 202110999083.X, filed with the China National Intellectual Property Administration on August 28, 2021 and entitled "NDPA FRAME TRANSMISSION METHOD AND RELATED APPARATUS", which is incorporated herein by reference in its entirety.

### TECHNICAL FIELD

This application relates to the field of wireless communication technologies, and in particular, to a null data packet announcement (null data packet announcement, NDPA) frame transmission method and a related apparatus.

### BACKGROUND

In wireless systems such as a wireless local area network (wireless local area network, WLAN), an access point (access point, AP) and a station (station, STA) need to obtain channel state information in advance to perform functions such as beamforming (beamforming, BF), rate control, and resource allocation. In the WLAN, a channel state information obtaining procedure is referred to as channel sounding.

In a related technology, in a process in which an AP performs channel sounding, the AP first sends a null data packet announcement (null data packet announcement, NDPA) frame to notify a STA that needs to perform channel sounding. Then, after a short interframe space (short interframe Space, SIFS), the AP sends a null data packet (null data packet, NDP) without a data field. The STA performs channel estimation based on the NDP, and then feeds back channel state information (channel state information, CSI) in a beamforming report (beamforming report, BF Report) frame. The NDPA frame has different variants (Variants) in different 802.11 standards. For example, a variant of the NDPA frame in the 802.11ac standard is referred to as a very high throughput (Very High Throughput, VHT) NDPA frame, a variant of the NDPA frame in the 802.11ax standard is referred to as a high efficient (High Efficient, HE) NDPA frame, a variant of the NDPA frame in the 802.11az standard is referred to as a ranging (Ranging) NDPA frame, and similarly, a variant of the NDPA frame in the 802.11be standard is referred to as an extremely high throughput (Extremely High Throughput, EHT) NDPA frame.

It can be learned that each generation of standard has a corresponding variant of the NDPA frame. As WLAN technologies develop, the 802.11 standard continuously evolves. Therefore, a corresponding NDPA frame in a future 802.11 standard (for example, a next-generation standard of the 802.11be standard) is also required to support channel sounding.

### SUMMARY

Embodiments of this application provide an NDPA frame transmission method and a related apparatus, applied to a future 802.11 standard to support channel sounding.

The following describes this application from different aspects. It should be understood that, for the following implementations and beneficial effect of the different aspects, refer to each other.

According to a first aspect, this application provides an NDPA frame transmission method. The method includes: A beamformer (Beamformer, Bfer, for example, an AP) generates an NDPA frame and sends the NDPA frame (which may be referred to as a universal NDPA frame). The NDPA frame includes an NDPA variant field (namely, B0 and B1 in a sounding dialog token field), and the NDPA variant field is set to 00. The NDPA frame further includes a first field and/or one or more station information fields. The first field includes one or more disambiguation bits, each disambiguation bit is set to 1, bit positions of the one or more disambiguation bits in the first field are B11+16*k, and k is a natural number. Each station information field includes one or more disambiguation bits, each disambiguation bit is 1, bit positions of the one or more disambiguation bits in the station information field are B27+16*q, and q is an integer greater than or equal to -1.

It should be understood that, in the NDPA frame, a frame type subfield is set to 01, and a subtype subfield is set to 0101. It should be further understood that the first field may also be referred to as an extended common field or a special station information field.

Optionally, a length of the first field and a length of each station information field are even-numbered octets. The length of the first field is represented as 2*n octets, and the length of the station information field is represented as 2*m octets. Both n and m are natural numbers, n and m cannot be 0 at the same time, and m+n is greater than 0. k is less than or equal to n-1, that is, k is 0, 1, 2, ..., and n-1. q is less than or equal to m-2, and q is -1, 0, 1, 2, ..., and m-2.

It can be learned that, a universal NDPA frame is designed in this solution. A first two-octet B11 following a sounding dialog token field in the universal NDPA frame is set to a disambiguation bit (forced to 1), so that a target STA distinguishes whether the NDPA frame is a VHT NDPA frame or a universal NDPA frame. This can apply the universal NDPA frame to a future generation or a plurality of generations of 802.11 standards to support channel sounding; and can further prevent misreading of a station of an earlier version, reduce unnecessary channel information calculation, and reduce waste of buffer resources and power consumption.

With reference to the first aspect, in a possible implementation, after the beamformer (for example, the AP) sends the NDPA frame, the method further includes: The beamformer (for example, the AP) sends a sounding physical layer protocol data unit (Physical Layer Protocol Data Unit, PPDU); and the beamformer (for example, the AP) receives a beamforming report, where the beamforming report carries channel state information.

Optionally, before the beamformer receives the beamforming report, the method further includes: The beamformer (for example, the AP) sends a trigger frame including a beamforming poll subtype, for example, a BRP trigger frame, for triggering one or more beamformees to feed back the beamforming reports.

It can be learned that this solution provides a channel sounding procedure applicable to a future 802.11 standard to support channel sounding and obtain channel state information.

With reference to the first aspect, in a possible implementation, first two octets in the first field include an association identifier field, a value of the association identifier field (for ease of description, the field may be referred to as a special association identifier 11 field) is greater than 2007 or a value that is selected in a standard and that is less than 2007, the value is not allocated to any STA, and k is a natural number greater than or equal to 1.

It can be learned that in this solution, the special AID 11 is used to replace the first disambiguation bit (namely, the first 2-octet B11 following the sounding dialog token field) in the universal NDPA frame, so that the target STA distinguishes whether the NDPA frame is the VHT NDPA frame or the universal NDPA frame.

According to a second aspect, this application provides an NDPA frame transmission method. The method includes: A beamformee (Beamformee, BFee, for example, a STA) receives and parses an NDPA frame. The NDPA frame includes an NDPA variant field (namely, B0 and B1 in a sounding dialog token field), and the NDPA variant field is set to 00. The NDPA frame further includes a first field and/or one or more station information fields. The first field includes one or more disambiguation bits, each disambiguation bit is set to 1, bit positions of the one or more disambiguation bits in the first field are B 11 + 16*k, and k is a natural number. Each station information field includes one or more disambiguation bits, each disambiguation bit is 1, bit positions of the one or more disambiguation bits in the station information field are B27+16*q, and q is an integer greater than or equal to -1.

It should be understood that, in the NDPA frame, a frame type subfield is set to 01, and a subtype subfield is set to 0101.

Optionally, a length of the first field and a length of each station information field are even-numbered octets. The length of the first field is represented as 2*n octets, and the length of the station information field is represented as 2*m octets. Both n and m are natural numbers, n and m cannot be 0 at the same time, and m+n is greater than 0. k is less than or equal to n-1, that is, k is 0, 1, 2, ..., and n-1. q is less than or equal to m-2, and q is -1, 0, 1, 2, ..., and m-2.

With reference to the second aspect, in a possible implementation, after the beamformee (for example, the STA) receives the NDPA frame, the method further includes: The beamformee (for example, the STA) receives a sounding PPDU, and obtains channel state information based on the sounding PPDU; and the beamformee (for example, the STA) sends a beamforming report, where the beamforming report carries the channel state information.

Optionally, before the beamformee (for example, the STA) sends the beamforming report, the method further includes: The beamformee (for example, the STA) receives a trigger frame including a beamforming poll subtype, for example, a BRP trigger frame, for triggering one or more beamformees to feed back the beamforming reports.

With reference to the second aspect, in a possible implementation, first two octets in the first field include an association identifier field, a value of the association identifier field (for ease of description, the field may be referred to as a special association identifier 11 field) is greater than 2007 or a value that is selected in a standard and that is less than 2007, the value is not allocated to any STA, and k is a natural number greater than or equal to 1.

According to a third aspect, this application provides a communication apparatus. The communication apparatus may be a beamformer. An AP is used as an example. The communication apparatus may be specifically the AP or a chip in the AP, for example, a Wi-Fi chip. The communication apparatus includes: a processing unit, configured to generate an NDPA frame, where an NDPA variant field included in the NDPA frame is set to 00, and the NDPA frame includes a first field and/or a station information field; and a transceiver unit, configured to send the NDPA frame, where the first field includes one or more disambiguation bits, each disambiguation bit is 1, bit positions of the one or more disambiguation bits in the first field are B 11 + 16*k, and k is a natural number; and the station information field includes one or more disambiguation bits, each disambiguation bit is 1, bit positions of the one or more disambiguation bits in the station information field are B27+16*q, and q is an integer greater than or equal to -1.

Optionally, a length of the first field and a length of each station information field are even-numbered octets. The length of the first field is represented as 2*n octets, and the length of the station information field is represented as 2*m octets. Both n and m are natural numbers, n and m cannot be 0 at the same time, and m+n is greater than 0. k is less than or equal to n-1, that is, k is 0, 1, 2, ..., and n-1. q is less than or equal to m-2, and q is -1, 0, 1, 2, ..., and m-2.

With reference to the third aspect, in a possible implementation, the transceiver unit is further configured to: send a sounding PPDU; and receive a beamforming report, where the beamforming report carries channel state information.

Optionally, the transceiver unit is further configured to send a trigger frame including a beamforming poll subtype, for example, a BRP trigger frame, for triggering one or more beamformees to feed back the beamforming reports.

With reference to the third aspect, in a possible implementation, first two octets in the first field include an association identifier field, a value of the association identifier field (for ease of description, the field may be referred to as a special association identifier 11 field) is greater than 2007 or a value that is selected in a standard and that is less than 2007, the value is not allocated to any STA, and k is a natural number greater than or equal to 1.

According to a fourth aspect, this application provides a communication apparatus. The communication apparatus may be a beamformee. A STA is used as an example. The communication apparatus may be specifically the STA or a chip in the STA, for example, a Wi-Fi chip. The communication apparatus includes: a transceiver unit, configured to receive an NDPA frame, where an NDPA variant field included in the NDPA frame is set to 00, and the NDPA frame includes a first field and/or a station information field; and a parsing unit, configured to parse the NDPA frame, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

Optionally, a length of the first field and a length of each station information field are even-numbered octets. The length of the first field is represented as 2*n octets, and the length of the station information field is represented as 2*m octets. Both n and m are natural numbers, n and m cannot be 0 at the same time, and m+n is greater than 0. k is less than or equal to n-1, that is, k is 0, 1, 2, ..., and n-1. q is less than or equal to m-2, and q is -1, 0, 1, 2, ..., and m-2.

With reference to the fourth aspect, in a possible implementation, the communication apparatus further includes an obtaining unit. The transceiver unit is further configured to receive a sounding PPDU. The obtaining unit is configured to obtain channel state information based on the sounding PPDU. The transceiver unit is further configured to send a beamforming report, where the beamforming report carries the channel state information.

Optionally, the transceiver unit is further configured to receive a trigger frame including a beamforming poll subtype, for example, a BRP trigger frame, for triggering one or more beamformees to feed back the beamforming reports.

With reference to the fourth aspect, in a possible implementation, first two octets in the first field include an association identifier field, a value of the association identifier field (for ease of description, the field may be referred to as a special association identifier 11 field) is greater than 2007 or a value that is selected in a standard and that is less than 2007, the value is not allocated to any STA, and k is a natural number greater than or equal to 1.

According to a fifth aspect, this application provides an NDPA frame transmission method. The method includes: a beamformer (for example, an AP) generates and sends an NDPA frame. The NDPA frame includes an NDPA variant field (namely, B0 and B 1 in a sounding dialog token field), and the NDPA variant field is set to any one of 01, 10, and 11. The NDPA frame further includes a first field and/or one or more station information fields. A length of the first field and a length of each station information field are a multiple of four octets. Every four octets in the first field include a special association identifier 11 field and a disambiguation bit, and the disambiguation bit is set to 1, a bit of the disambiguation bit in the first field is B27+32*k, and k is a natural number. Every four octets in each station information field include a special association identifier 11 field and a disambiguation bit, the disambiguation bit is set to 1, a bit of the disambiguation bit in the station information field is B27+32*q, and q is a natural number.

A value of the special association identifier 11 field herein is greater than 2007, or is a value that is selected in a standard and that is less than 2007, and the value is not allocated to any STA. In the NDPA frame, a frame type subfield is set to 01, and a subtype subfield is set to 0101.

Optionally, the length of the first field is represented as 4*n octets, and the length of each station information field is represented as 4*m octets. Both n and m are natural numbers, n and m cannot be 0 at the same time, and m+n is greater than 0. k is less than or equal to n-1, that is, k is 0, 1, 2, ..., and n-1; and q is less than or equal to m-1, and q is 0, 1, 2, ..., and m-1.

It can be learned that, a universal NDPA frame is designed in this solution. Every four octets following the sounding dialog token field include one special association identifier 11 field and one disambiguation bit. This can prevent misreading of a station of an earlier version, reduce unnecessary channel information calculation, and reduce waste of buffer resources and power consumption; and further apply the universal NDPA frame to a future generation or a plurality of generations of 802.11 standards to support channel sounding.

With reference to the fifth aspect, in a possible implementation, after the beamformer (for example, the AP) sends the NDPA frame, the method further includes: The beamformer (for example, the AP) sends a sounding PPDU; and the beamformer (for example, the AP) receives a beamforming report, where the beamforming report carries channel state information.

Optionally, before the beamformer receives the beamforming report, the method further includes: The beamformer (for example, the AP) sends a trigger frame including a beamforming poll subtype, for example, a BRP trigger frame, for triggering one or more beamformees to feed back the beamforming reports.

With reference to the fifth aspect, in a possible implementation, the special association identifier 11 field is first 11 bits of every four octets in the first field, and the association identifier 11 field whose value is less than or equal to 2007 is first 11 bits of every four octets in the station information field.

According to a sixth aspect, this application provides an NDPA frame transmission method. The method includes: A beamformee (for example, a STA) receives and parses an NDPA frame. The NDPA frame includes an NDPA variant field (namely, B0 and B1 in a sounding dialog token field), and the NDPA variant field is set to any one of 01, 10, and 11. The NDPA frame further includes a first field and/or one or more station information fields. A length of the first field and a length of each station information field are a multiple of four octets. Every four octets in the first field include a special association identifier 11 field and a disambiguation bit, and the disambiguation bit is set to 1, a bit of the disambiguation bit in the first field is B27+32*k, and k is a natural number. Every four octets in each station information field include a special association identifier 11 field and a disambiguation bit, the disambiguation bit is set to 1, a bit of the disambiguation bit in the station information field is B27+32*q, and q is a natural number.

A value of the special association identifier 11 field herein is greater than 2007, or is a value that is selected in a standard and that is less than 2007, and the value is not allocated to any STA. In the NDPA frame, a frame type subfield is set to 01, and a subtype subfield is set to 0101.

Optionally, the length of the first field is represented as 4*n octets, and the length of each station information field is represented as 4*m octets. Both n and m are natural numbers, n and m cannot be 0 at the same time, and m+n is greater than 0. k is less than or equal to n-1, that is, k is 0, 1, 2, ..., and n-1; and q is less than or equal to m-1, and q is 0, 1, 2, ..., and m-1.

With reference to the sixth aspect, in a possible implementation, after the beamformee (for example, the STA) receives the NDPA frame, the method further includes: The beamformee (for example, the STA) receives a sounding PPDU, and obtains channel state information based on the sounding PPDU; and the beamformee (for example, the STA) sends a beamforming report, where the beamforming report carries the channel state information.

Optionally, before the beamformee (for example, the STA) sends the beamforming report, the method further includes: The beamformee (for example, the STA) receives a trigger frame including a beamforming poll subtype, for example, a BRP trigger frame, for triggering one or more beamformees to feed back the beamforming reports.

With reference to the sixth aspect, in a possible implementation, the special association identifier 11 field is first 11 bits of every four octets in the first field, and the association identifier 11 field whose value is less than or equal to 2007 is first 11 bits of every four octets in the station information field.

According to a seventh aspect, this application provides a communication apparatus. The communication apparatus may be a beamformer. An AP is used as an example. The communication apparatus may be specifically the AP or a chip in the AP, for example, a Wi-Fi chip. The communication apparatus includes: a processing unit, configured to generate an NDPA frame, where an NDPA variant field included in the NDPA frame is set to any one of 01, 10, and 11, and the NDPA frame includes a first field and/or a station information field; and a transceiver unit, configured to send the NDPA frame. Every four octets in the first field include a special association identifier 11 field and a disambiguation bit, the disambiguation bit is 1, a bit position of the disambiguation bit in the first field is B27+32*k, and k is a natural number. Every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets.

A value of the special association identifier 11 field herein is greater than 2007, or is a value that is selected in a standard and that is less than 2007, and the value is not allocated to any STA. In the NDPA frame, a frame type subfield is set to 01, and a subtype subfield is set to 0101.

Optionally, the length of the first field is represented as 4*n octets, and the length of each station information field is represented as 4*m octets. Both n and m are natural numbers, n and m cannot be 0 at the same time, and m+n is greater than 0. k is less than or equal to n-1, that is, k is 0, 1, 2, ..., and n-1; and q is less than or equal to m-1, and q is 0, 1, 2, ..., and m-1.

With reference to the seventh aspect, in a possible implementation, the transceiver unit is further configured to: send a sounding PPDU; and receive a beamforming report, where the beamforming report carries channel state information.

Optionally, the transceiver unit is further configured to send a trigger frame including a beamforming poll subtype, for example, a BRP trigger frame, for triggering one or more beamformees to feed back the beamforming reports.

With reference to the seventh aspect, in a possible implementation, the special association identifier 11 field is first 11 bits of every four octets in the first field, and the association identifier 11 field whose value is less than or equal to 2007 is first 11 bits of every four octets in the station information field.

According to an eighth aspect, this application provides a communication apparatus. The communication apparatus may be a beamformee. A STA is used as an example. The communication apparatus may be specifically the STA or a chip in the STA, for example, a Wi-Fi chip. The communication apparatus includes: a transceiver unit, configured to receive an NDPA frame, where an NDPA variant field included in the NDPA frame is set to any one of 01, 10, and 11, and the NDPA frame includes a first field and/or a station information field; and a parsing unit, configured to parse the NDPA frame. Every four octets in the first field include a special association identifier 11 field and a disambiguation bit, the disambiguation bit is 1, a bit position of the disambiguation bit in the first field is B27+32*k, and k is a natural number. Every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets.

A value of the special association identifier 11 field herein is greater than 2007, or is a value that is selected in a standard and that is less than 2007, and the value is not allocated to any STA. In the NDPA frame, a frame type subfield is set to 01, and a subtype subfield is set to 0101.

Optionally, the length of the first field is represented as 4*n octets, and the length of each station information field is represented as 4*m octets. Both n and m are natural numbers, n and m cannot be 0 at the same time, and m+n is greater than 0. k is less than or equal to n-1, that is, k is 0, 1, 2, ..., and n-1; and q is less than or equal to m-1, and q is 0, 1, 2, ..., and m-1.

With reference to the eighth aspect, in a possible implementation, the communication apparatus further includes an obtaining unit. The transceiver unit is further configured to receive a sounding PPDU. The obtaining unit is configured to obtain channel state information based on the sounding PPDU. The transceiver unit is further configured to send a beamforming report, where the beamforming report carries the channel state information.

Optionally, the transceiver unit is further configured to receive a trigger frame including a beamforming poll subtype, for example, a BRP trigger frame, for triggering one or more beamformees to feed back the beamforming reports.

With reference to the eighth aspect, in a possible implementation, the special association identifier 11 field is first 11 bits of every four octets in the first field, and the association identifier 11 field whose value is less than or equal to 2007 is first 11 bits of every four octets in the station information field.

In a possible implementation of any one of the first aspect to the eighth aspect, the NDPA frame includes an NDPA variant extension subfield/type information, and the NDPA variant extension subfield/type information indicate a variant type of the NDPA frame. It should be understood that the variant type of the NDPA frame is not any one in an existing standard.

Optionally, the NDPA variant extension subfield may be in the first field in the NDPA frame, and may be specifically in first two octets in the first field. Alternatively, the NDPA variant extension subfield may be in the sounding dialog token field in the NDPA frame.

In this way, when receiving the universal NDPA frame, the STA first obtains the type information/NDPA variant extension subfield from the universal NDPA frame, determines a variant of the universal NDPA frame based on the type information/NDPA variant extension subfield, and then determines, based on the variant of the universal NDPA frame, a reading policy for reading the station information field.

When a value of the NDPA variant extension subfield is any value within a first value range, it indicates that the NDPA variant extension subfield is set to a validate (Validate) state. In other words, there is an entry in a validate state in the NDPA variant extension field. When the value of the NDPA variant extension subfield is a first value, the NDPA variant extension subfield indicates that the variant type may be a first variant type, for example, an EHT R2 variant, in other words, the NDPA frame is an EHT R2 NDPA frame; or when the value of the NDPA variant extension subfield is a second value, the NDPA variant extension subfield indicates that the variant type may be a second variant type, for example, a sensing (sensing) variant, in other words, the NDPA frame is a SENSING NDPA frame.

Optionally, when receiving and parsing the NDPA frame, if the beamformee (for example, the STA) obtains, through parsing, that the NDPA variant extension subfield in the NDPA frame is set to the validate state, or obtains, through parsing, that the value of the NDPA variant extension subfield is not set to a default (default) value, the beamformee (for example, the STA) stops parsing a field following the NDPA variant extension subfield.

It can be learned that, in this solution, the NDPA variant extension subfield is designed in the universal NDPA frame, to indicate the NDPA frame is a variant NDPA frame in a future standard. This can apply the universal NDPA frame to a future plurality of generations 802.11 standards to support channel sounding.

In a possible implementation of any one of the first to the eighth aspects, n may be different and m may be different in each generation of 802.11 standard. n and m may also be implicitly indicated by using the NDPA variant extension subfield/type information. In other words, the variant type indicated by the NDPA variant extension subfield/type information is in a one-to-one correspondence with n and m. To be specific, n and m may be determined based on the variant type indicated by the NDPA variant extension subfield/type information.

In a possible implementation of any one of the first to the eighth aspects, n and m may be indicated by using the first two octets in the first field (the extended common field or the special station information field) or the sounding dialog token field.

It can be learned that this solution provides two manners of indicating n and m, to assist the beamformee (for example, the STA) in determining information such as a length of the universal NDPA frame.

In a possible implementation of any one of the first to the eighth aspects, the first field (namely, the extended common field or the special station information field) may further include some parameters about channel sounding. For example, the first field further includes third indication information and fourth indication information. The third indication information indicates a number of access points participating in channel sounding, and the fourth indication information indicates an identifier of each access point participating in channel sounding. In addition, the station information field may further include access point identifier information, and the access point identifier information indicates an access point associated with a station indicated by the station information field.

Optionally, the extended common field may further include spatial stream allocation information that indicates a number of spatial streams and a spatial stream sequence in each AP participating in channel sounding.

In a possible implementation of any one of the first to the eighth aspects, the sounding PPDU includes a universal signal (Universal Signal, U-SIG) field. The U-SIG field includes a physical layer version indication subfield that indicates a physical layer version of the sounding PPDU. The physical layer version of the sounding PPDU is consistent with the variant type indicated by the NDPA variant extension subfield in the NDPA frame (namely, the universal NDPA frame).

According to a ninth aspect, this application provides a communication apparatus that is specifically a beamformer, including a processor and a transceiver.

In a design, the processor is configured to generate an NDPA frame, where an NDPA variant field included in the NDPA frame is set to 00, and the NDPA frame includes a first field and/or a station information field; and a transceiver is configured to send the NDPA frame, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

In another design, the processor is configured to generate an NDPA frame, where an NDPA variant field included in the NDPA frame is set to any one of 01, 10, and 11, and the NDPA frame includes a first field and/or a station information field; and the transceiver is configured to send the NDPA frame. Every four octets in the first field include a special association identifier 11 field and a disambiguation bit, the disambiguation bit is 1, a bit position of the disambiguation bit in the first field is B27+32*k, and k is a natural number. Every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets.

According to a tenth aspect, this application provides a communication apparatus that is specifically a beamformee, including a processor and a transceiver.

In a design, the transceiver is configured to receive an NDPA frame, where an NDPA variant field included in the NDPA frame is set to 00, and the NDPA frame includes a first field and/or a station information field; and the processor is configured to parse the NDPA frame, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

In another design, the transceiver is configured to receive an NDPA frame, where an NDPA variant field included in the NDPA frame is set to any one of 01, 10, and 11, and the NDPA frame includes a first field and/or a station information field; and the processor is configured to parse the NDPA frame. Every four octets in the first field include a special association identifier 11 field and a disambiguation bit, the disambiguation bit is 1, a bit position of the disambiguation bit in the first field is B27+32*k, and k is a natural number. Every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets.

According to an eleventh aspect, this application provides an apparatus. The apparatus is implemented in a product form of a chip, and includes an input/output interface and a processing circuit. The apparatus is a chip in a beamformer.

In a design, the processing circuit is configured to generate an NDPA frame, where an NDPA variant field included in the NDPA frame is set to 00, and the NDPA frame includes a first field and/or a station information field; and the input/output interface is configured to output the NDPA frame, process the NDPA frame by using a radio frequency circuit, and send the NDPA frame through an antenna, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

In another design, the processing circuit is configured to generate an NDPA frame, where an NDPA variant field included in the NDPA frame is set to any one of 01, 10, and 11, and the NDPA frame includes a first field and/or a station information field; and the input/output interface is configured to output the NDPA frame, process the NDPA frame by using a radio frequency circuit, and send the NDPA frame through an antenna. Every four octets in the first field include a special association identifier 11 field and a disambiguation bit, the disambiguation bit is 1, a bit position of the disambiguation bit in the first field is B27+32*k, and k is a natural number. Every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets.

According to a twelfth aspect, this application provides an apparatus. The apparatus is implemented in a product form of a chip, and includes an input/output interface and a processing circuit. The apparatus is a chip in a beamformee.

In a design, the input/output interface inputs an NDPA frame received through an antenna and a radio frequency circuit, where an NDPA variant field included in the NDPA frame is set to 00, and the NDPA frame includes a first field and/or a station information field; and the processing circuit is configured to parse the NDPA frame, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

In another design, the input/output interface inputs an NDPA frame received through an antenna and a radio frequency circuit, where an NDPA variant field included in the NDPA frame is set to any one of 01, 10, and 11, and the NDPA frame includes a first field and/or a station information field; and the processing circuit is configured to parse the NDPA frame. Every four octets in the first field include a special association identifier 11 field and a disambiguation bit, the disambiguation bit is 1, a bit position of the disambiguation bit in the first field is B27+32*k, and k is a natural number. Every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets.

According to a thirteenth aspect, this application provides a computer-readable storage medium. The computer-readable storage medium stores program instructions, and when the program instructions are run on a computer, the computer is enabled to perform the NDPA frame transmission method according to the first aspect, the second aspect, the fifth aspect, or the sixth aspect.

According to a fourteenth aspect, this application provides a computer program product including program instructions. When the computer program product runs on a computer, the computer is enabled to perform the NDPA frame transmission method according to the first aspect, the second aspect, the fifth aspect, or the sixth aspect.

Embodiments of this application can be applied to the future 802.11 standard to support channel sounding, and can prevent a STA that supports only an earlier standard (for example, the 802.11be standard and an earlier standard) from misreading.

### BRIEF DESCRIPTION OF DRAWINGS

To describe technical solutions in embodiments of this application more clearly, the following briefly describes accompanying drawings for describing embodiments.
FIG. 1 is a schematic diagram of a network structure according to an embodiment of this application;
FIG. 2a is a schematic diagram of a structure of an access point according to an embodiment of this application;
FIG. 2b is a schematic diagram of a structure of a station according to an embodiment of this application;
FIG. 3 is a schematic diagram of a channel sounding procedure in the 802.11ac standard;
FIG. 4 is a schematic diagram of a frame structure of a VHT NDPA frame;
FIG. 5a is a schematic diagram of a single-user/STA channel sounding procedure in 802.11ax;
FIG. 5b is a schematic diagram of a multi-user/STA channel sounding procedure in 802.11ax;
FIG. 6 is a schematic diagram of a frame structure of an HE NDPA frame;
FIG. 7 is a schematic diagram of a frame structure of an EHT NDPA frame;
FIG. 8 is a schematic diagram of a frame structure of a sounding dialog token field;
FIG. 9 is a schematic diagram of reading an HE NDPA frame by a VHT station of an earlier version;
FIG. 10 is a schematic flowchart of an NDPA frame transmission method according to an embodiment of this application;
FIG. 11a is a schematic diagram of a first frame structure of a universal NDPA frame according to an embodiment of this application;
FIG. 11b is a schematic diagram of a second frame structure of a universal NDPA frame according to an embodiment of this application;
FIG. 11c is a schematic diagram of a third frame structure of a universal NDPA frame according to an embodiment of this application;
FIG. 12 is a schematic diagram of a frame structure of a universal NDPA frame in an AP coordinated channel sounding process according to an embodiment of this application;
FIG. 13 is a schematic diagram of a fourth frame structure of a universal NDPA frame according to an embodiment of this application;
FIG. 14 is a schematic diagram of a frame structure of a sounding PPDU according to an embodiment of this application;
FIG. 15 is a schematic diagram of a structure of a communication apparatus 1 according to an embodiment of this application;
FIG. 16 is a schematic diagram of a structure of a communication apparatus 2 according to an embodiment of this application; and
FIG. 17 is a schematic diagram of a structure of a communication apparatus 1000 according to an embodiment of this application.

### DESCRIPTION OF EMBODIMENTS

The following clearly and completely describes the technical solutions in embodiments of this application with reference to the accompanying drawings in embodiments of this application.

To clearly describe technical solutions in embodiments of this application, words such as "first" and "second" are used in embodiments of this application to distinguish between same items or similar items that have basically a same function or purpose. For example, first indication information and second indication information are merely used to distinguish between different indication information, and do not limit sequences of the first indication information and the second indication information. A person skilled in the art may understand that the terms such as "first" and "second" do not limit a quantity or an execution sequence, and the terms such as "first" and "second" do not indicate a definite difference.

In the description of this application, unless otherwise specified, "/" generally indicates an "or" relationship between associated objects. For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one piece/type" means one piece/type or more pieces/types, and "a plurality of pieces/types" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

Embodiments of this application provide an NDPA frame transmission method applied to a wireless communication system. The wireless communication system may be a WLAN or a cellular network. The method may be implemented by a communication device in the wireless communication system, or by a chip or a processor in the communication device. In the wireless local area network, the communication device supports communication by using 802.11 series protocols. The 802.11 series protocols include future 802.11 standards (such as Wi-Fi 8 and Wi-Fi 9), 802.11be, 802.11bf, 802.11be, 802.11ax, 802.11a/b/g/n/ac, or the like.

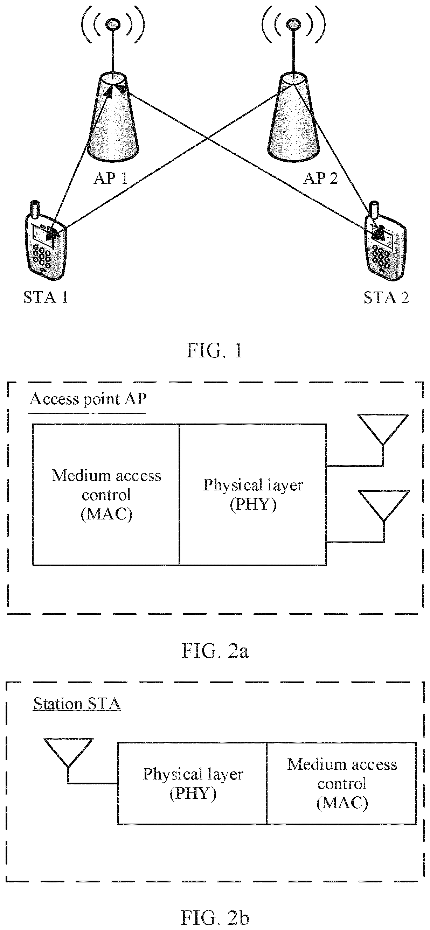

FIG. 1 is a schematic diagram of a network structure according to an embodiment of this application. The network structure may be a wireless local area network, and the network structure may include one or more access point (access point, AP) stations and one or more non-access point stations (non-access point stations, non-AP STAs). For ease of description, in this specification, an access point station is referred to as an access point (AP), and a non-access point station is referred to as a station (STA). The AP is, for example, an AP 1 and an AP 2 in FIG. 1, and the STAis, for example, a STA 1 and a STA2 in FIG. 1. The NDPA frame transmission method in this application is applicable to a scenario in which one or more nodes communicate with one or more other nodes, for example, a scenario in which one or more APs communicate with one or more STAs, and is also applicable to a scenario in which one or more APs communicate with one or more APs, and one or more STAs communicate with one or more STAs. For example, the NDPA frame transmission method provided in this application is applicable to a scenario in which a plurality of APs and one or more STAs perform AP coordinated channel sounding. Both the AP and the STA support a WLAN communication protocol. The communication protocol may include a next generation protocol of 802.1 1be, the 802.1 1bf protocol, and the like, and may further include protocols such as 802.11be, 802.11ax, and 802.11ac.

Optionally, the access point (for example, the AP 1 or the AP 2 in FIG. 1) in this application is an apparatus having a wireless communication function, supports communication by using a WLAN protocol, has a function of communicating with another device (for example, a station or another access point) in a WLAN network, and certainly, may further have a function of communicating with another device. The AP, with a typical coverage radius of tens to hundreds of meters, is mainly deployed in a family, a building, and a campus, and certainly, may be deployed outdoors. In a WLAN system, the access point may be referred to as an access point station (access point station, AP STA). The apparatus having the wireless communication function may be an entire device, or may be a chip or a processing system installed in the entire device. A device in which the chip or the processing system is installed may implement the method and the function in embodiments of this application under control of the chip or the processing system. The AP in embodiments of this application is an apparatus that provides a service for a STA, and may support the 802.11 series protocols. For example, the AP may be a communication entity such as a communication server with a wireless-fidelity (wireless-fidelity, Wi-Fi) chip, a router, a switch, or a bridge. Alternatively, the AP may include various forms of macro base stations, micro base stations, relay stations, and the like. Certainly, the AP may alternatively be chips and processing systems in these various forms of devices, to implement the methods and functions in embodiments of this application.

Optionally, the station (for example, the STA 1 or the STA 2 in FIG. 1) in this application is an apparatus having a wireless communication function, supports communication by using a WLAN protocol, and has a capability of communicating with another station or an access point in a WLAN network. In a WLAN system, the station may be referred to as a non-access point station (non-AP STA). For example, the STA is any user communication device that allows a user to communicate with an AP and further communicate with a WLAN. The apparatus having the wireless communication function may be an entire device, or may be a chip or a processing system installed in the entire device. A device in which the chip or the processing system is installed may implement the method and the function in embodiments of this application under control of the chip or the processing system. For example, the STA may be user equipment that can connect to the internet, for example, a tablet computer that supports a Wi-Fi communication function, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone; or may be an internet of things node in the internet of things, a vehicle-mounted communication apparatus in the internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in the internet of vehicle, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in embodiments of this application, and are merely examples for description herein.

It should be understood that the 802.11 standard focuses on a physical layer (physical layer, PHY) and a medium access control layer (medium access control, MAC). Refer to FIG. 2a for an example. FIG. 2a is a schematic diagram of a structure of an access point according to an embodiment of this application. The AP may be a multi-antenna/multi-radio frequency, or may be a single-antenna/single-radio frequency. The antenna/radio frequency is used to send/receive data packets (the data packet in this specification may also be referred to as a physical layer protocol data unit (Physical Layer Protocol Data Unit, PPDU)). In an implementation, an antenna or a radio frequency part of the AP may be separated from a main body of the AP, that is, may be remotely disposed. In FIG. 2a, the AP may include a physical layer processing circuit and a media access control processing circuit. The physical layer processing circuit may be configured to process a physical layer signal, and the MAC layer processing circuit may be configured to process a MAC layer signal. Refer to FIG. 2b for another example. FIG. 2b is a schematic diagram of a structure of a station according to an embodiment of this application. FIG. 2b is a schematic diagram of the structure of the STA of single-antenna/single-radio-frequency. In an actual scenario, the STA may be multi-antenna/multi-radio frequency, and may be a device with more than two antennas. The antenna/radio frequency is used to send/receive data packets. In an implementation, an antenna or a radio frequency part of the STA may be separated from a main body of the STA, that is, may be remotely disposed. In FIG. 2b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes a system architecture in embodiments of this application. To better understand the technical solutions in embodiments of this application, the following describes several pieces of content related to embodiments of this application.
1. Channel sounding procedure and frame formats of NDPA frames in 802.11ac, 802.11ax, 802.11az, and 802.11be standards.

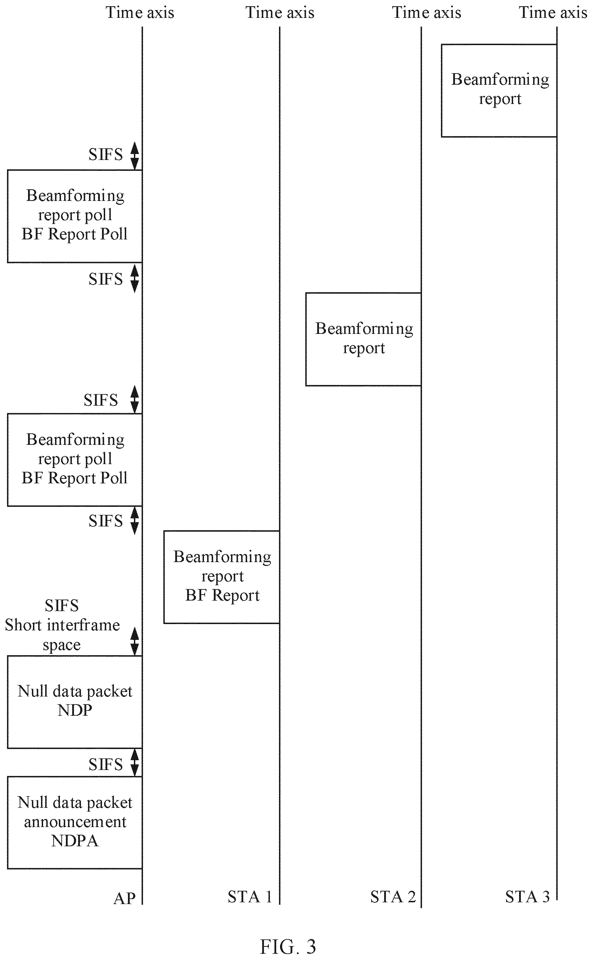

FIG. 3 is a schematic diagram of a channel sounding procedure in the 802.11ac standard. As shown in FIG. 3, an AP (as a channel sounding initiator, which may be referred to as a beamformer, BFer for short) sends an NDPA frame, to notify a STA (as a channel sounding responder, which may be referred to as a Beamformee, BFee for short) that needs to perform channel sounding, and sends a channel sounding related parameter. Then, the AP sends an NDP after one SIFS. The STA performs channel estimation based on the NDP, and then feeds back channel state information (Channel State Information, CSI) in a beamforming report (Beamforming Report, BF Report). Then, the AP may send a beamforming report poll (BF Report Poll) frame to a STA to request channel state information that is not fed back or that is incorrectly fed back. It should be understood that the NDP is a data packet that has no data field part and does not carry a MAC frame. The NDP is also referred to as a sounding PPDU (sounding PPDU).

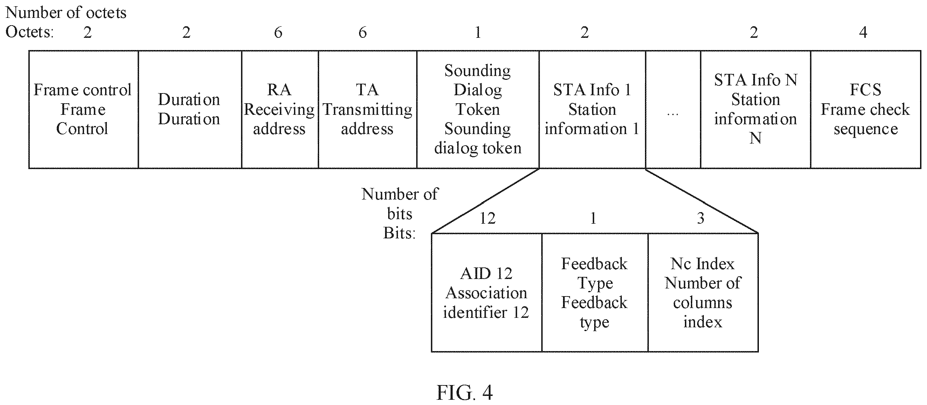

The following describes a frame format of the NDPA frame in FIG. 3, namely, a frame format of the NDPA frame in the 802.11ac standard. The NDPA frame has different variants (Variants) in different standards. The NDPA frame in 802.11ac is generally referred to as a VHT NDPA frame. A frame control field has a frame type subfield and a subtype subfield, and indicates that the frame is the NDPA frame (the frame type subfield is set to 01, to indicate a control frame; and the subtype subfield is set to 0101, to indicate an NDPA frame in the control frame). FIG. 4 is a schematic diagram of the frame structure of the VHT NDPA frame. As shown in FIG. 4, the VHT NDPA frame includes a frame control (frame control) field, a duration (duration) field, a receiving address (Receiving Address, RA) field, a transmitting address (Transmitting Address, TA) field, a sounding dialog token (Sounding Dialog Token) field, and one or more station information (STA information, STA Info) fields. The frame control field includes the frame type subfield that is set to 01 and the subtype subfield that is set to 0101, and indicates that the frame is the NDPA frame. The sounding dialog token (Sounding Dialog Token) field is used to index a sequence number of channel sounding. A length of each station information field is 2 octets, and includes a station association identifier 12 (Association Identifier 12, AID 12) subfield, a feedback type (Feedback Type) subfield, and a number of columns (Number of columns, Nc) index subfield. The AID 12 subfield identifies an associated station. In other words, an AID 12 indicates a STA that needs to perform channel sounding. The feedback type subfield indicates whether a feedback is a single-user feedback or a multi-user feedback. The number of columns index subfield indicates a number of columns for which the station needs to feed back channel state information, or may be understood as indicating a number of spatial steams for which the station needs to feed back channel state information. The RA field and the TA field respectively identify a receiving end and a transmitting end of the MAC frame.

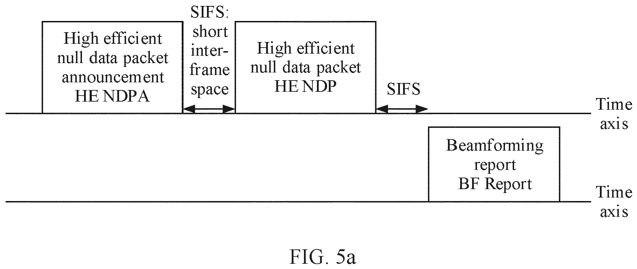

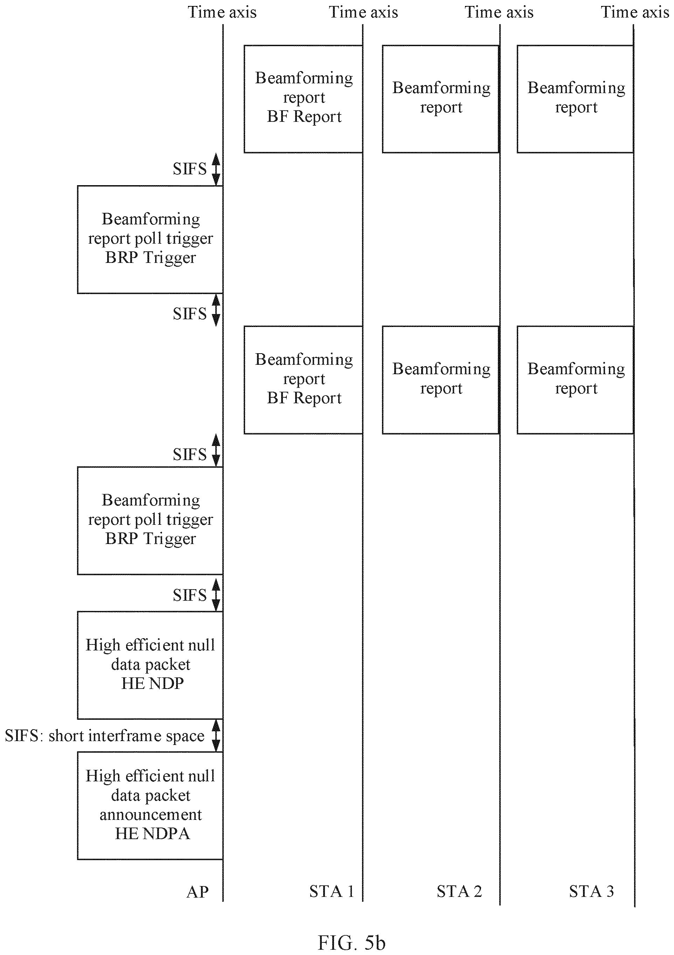

For the next-generation standard 802.11ax of 802.11ac, a single-user channel sounding procedure in 802.11ac is reserved. FIG. 5a is a schematic diagram of the single-user/STA channel sounding procedure in 802.11ax. As shown in FIG. 5a, the channel sounding procedure is the same as the channel sounding procedure in the 802.11ax standard. Details are not described herein again. To further improve channel sounding efficiency, 802.11ax introduces a trigger (Trigger)-based multi-user uplink transmission mechanism in a channel sounding process. In other words, an AP sends a trigger frame to trigger a plurality of STAs to simultaneously perform uplink multi-user transmission. Specifically, FIG. 5b is a schematic diagram of a multi-user/STA channel sounding procedure in 802.11ax. As shown in FIG. 5b, an AP sends an HE NDPA frame to notify STAs (for example, a STA 1, a STA 2, and a STA 3 in FIG. 5b) that needs to perform channel sounding, and sends channel sounding related parameters. Then, the AP sends an HE NDP after one SIFS. Then, after another SIFS, the AP sends a beamforming report poll (BF Report Poll, BRP) trigger frame, to trigger the plurality of STAs that need to perform channel sounding to feed back beamforming reports simultaneously/concurrently. After still another SIFS, the STAs that need to perform channel sounding simultaneously/concurrently feed back the beamforming reports to the AP. Optionally, the AP may send a BRP trigger frame again to request, from the STA that performs feedback incorrectly, channel state information.

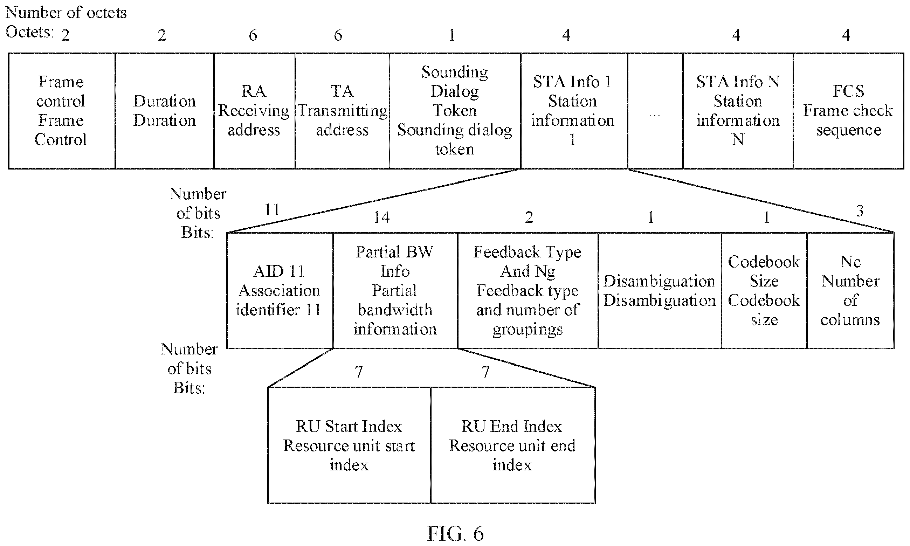

In the 802.11ax standard, a variant of the NDPA frame is an HE NDPA frame, which inherits a type and a subtype of the VHT NDPA frame. FIG. 6 is a schematic diagram of a frame structure of the HE NDPA frame. As shown in FIG. 6, the HE NDPA frame includes a frame control field, a duration field, an RA field, a TA field, a sounding dialog token field, and one or more station information fields. Compared with that in the VHT NDPA frame, the station information field in the HE NDPA frame is extended to 4 octets, and is introduced with a partial bandwidth information (Partial BW Info, Partial Bandwidth Information) subfield to indicate a STA to feed back channel state information of a partial bandwidth. A feedback portion indicates a contiguous segment of RU indicated by a resource unit (Resource Unit, RU) start index (Start Index) to a resource unit end index (End Index). A feedback type and number of groupings (Number of groupings, Ng) subfield in the station information field indicates whether a feedback is a single-user feedback or a multi-user feedback, and indicates a number of groupings for the feedback. The number of groupings (Ng) indicates how many subcarriers are grouped into one group, and the group of subcarriers only needs to feed back channel state information in a unified manner. This reduces feedback compression. A codebook size (codebook size) subfield indicates quantization accuracy. Different accuracy corresponds to different overheads. A number of columns (Nc) subfield indicates a number of columns of a beamforming feedback matrix. In the 802.11ax, a maximum of eight antennas are defined on a STA side, and a maximum of eight data streams are supported. Therefore, three bits are used to indicate that a number of columns for the feedback is a value from 1 to 8.

The 802.11az standard is used for ranging (Ranging). In the 802.11az standard, a variant of the NDPA frame is referred to as a ranging NDPA frame, which inherits a type and a subtype of the VHT NDPA frame. In addition, similar to that in the frame format of the HE NDPA frame, a station information field is 4 octets, and first 11 bits are an AID 11 and are disambiguation bits at the same location. A specific frame format of the ranging NDPA frame is not described herein again.

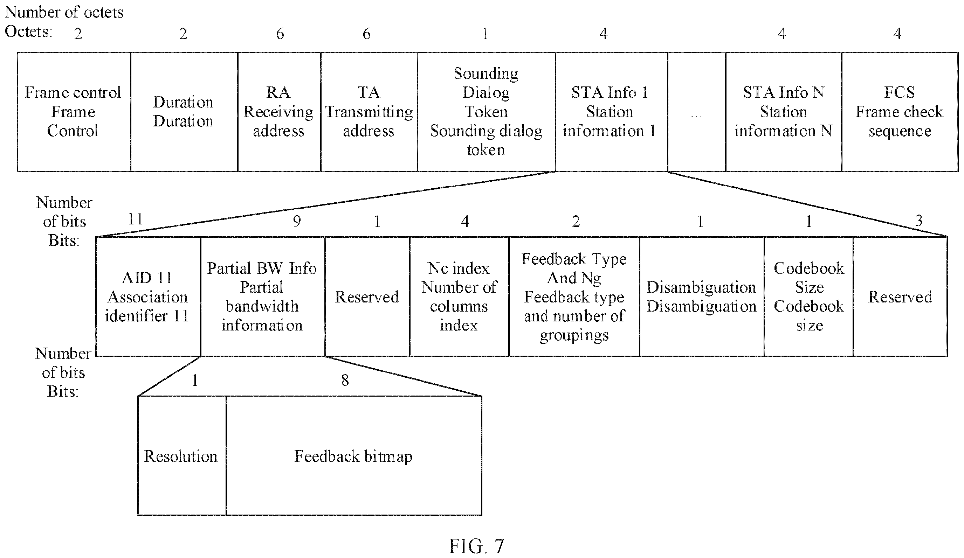

A channel sounding procedure in the 802.11be standard is similar to the channel sounding procedure in the 802.11ax standard. Details are not described herein again. A variant of the NDPA frame in the 802.11be standard is referred to as an EHT NDPA frame, which inherits a type and a subtype of the VHT NDPA frame. FIG. 7 is a schematic diagram of a frame structure of the EHT NDPA frame. As shown in FIG. 7, the HE NDPA frame includes a frame control field, a duration field, an RA field, a TA field, a sounding dialog token field, and one or more station information fields. One station information field indicates related information required by a station to perform channel sounding. An association identifier 11 (AID 11) indicates least significant 11 bits of an association identifier of a station, and is used to identify the target station. Compared with that in the HE NDPA frame, partial bandwidth information (Partial BW Info) is a 9-bit bitmap, and indicates a STA to feed back channel state information of a partial bandwidth. A first bit in the partial bandwidth information indicates whether a granularity of a sub-bandwidth represented by each bit in a following 8-bit bitmap is 20 MHz or 40 MHz. For example, when a bandwidth is 320 MHz, the first bit in the partial bandwidth information is 1, to indicate that the granularity is 40 MHz, and therefore each of following eight bits indicates eight 40 MHz sub-bandwidths in the entire 320 MHz. A number of columns (Number of Columns, Nc) index subfield indicates a number of columns of channel state information (a compressed beamforming report matrix V) that needs to be fed back by a STA. A feedback type and number of groupings (Feedback Type And Ng) subfield indicates a feedback type and that subcarriers whose number is Ng are grouped into one group, where the feedback type includes a single-user (Single User, SU) feedback, a multi-user (Multiple User, MU) feedback, and a channel quality indication (Channel Quality Indication, CQI). Ng includes 4 and 16. A larger Ng indicates a larger compression amount. A codebook size (Codebook Size) subfield indicates quantization accuracy. Different accuracy corresponds to different overheads. In addition, two reserved fields are further included, including one and three reserved bits, respectively, for subsequent extension.

### 2. NDPA frame misreading prevention manners in different 802.11 standards

Different standards have different variants (Variant) in NDPA frames, and each new generation of 802.11 standards is compatible with a previous generation of 802.11 standards. Therefore, different variants need to be distinguished at a receiving end, and how to prevent a STA of an earlier version from misreading an NDPA frame of a new version.

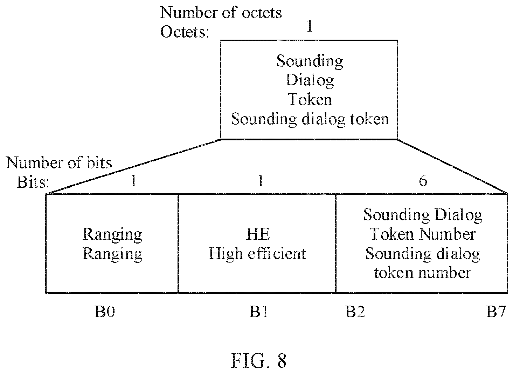

Specifically, FIG. 8 is a schematic diagram of a frame structure of a sounding dialog token field. As shown in FIG. 8, a number of octets in the sounding dialog token may be 1 octet, to be specific, a number of bits in the sounding dialog token may be 8 bits, which are B0 to B7. A first bit (B0) and a second bit (B1) in the sounding dialog token field indicate a variant of an NDPA frame. B0 and B1 may also be uniformly described as an NDPA variant field. The two bits may indicate four variants in total. Table 1 shows a correspondence between meanings and values of B0 (also referred to as a ranging subfield) and B1 (also referred to as an HE subfield) in the sounding dialog token field.

**Table 1: Indication of the variant of the NDPA frame**

| Ranging (ranging) B0 | HE (high efficient) B1 | Variant (variant) |
|---|---|---|
| 0 | 0 | VHT |
| 0 | 1 | HE |
| 1 | 0 | Ranging |
| 1 | 1 | EHT |

In a VHT standard phase, because the NDPA frame has only one variant (namely, only the VHT NDPA frame), no means for distinguishing is provided at that time, and the bits B0 and B1 in the sounding dialog token field are reserved (default values are 00). A VHT station directly ignores B0 and B 1 in the sounding dialog token field, and does not need to distinguish the variant of the NDPA frame.

In an HE standard phase, an HE indication is introduced into B 1 in the 1-octet sounding dialog token field in the NDPA frame, to indicate whether the NDPA frame is an HE NDPA frame, and B0 is still reserved (a default value is 0). The bit (namely, B 1) is used to distinguish between the VHT NDPA frame and the HE NDPA frame. When B1 in the sounding dialog token field is 1, it indicates the variant is an HE variant, that is, the NDPA frame is the HE NDPA frame; or when B 1 is 0, it indicates the variant is the VHT variant, that is, the NDPA frame is the VHT NDPA frame. Because an HE station can read both the two types of NDPA frames, the HE station may identify, based on B 1 in the sounding dialog token field, whether the frame is the VHT NDPA frame or the HE NDPA frame. However, the VHT station cannot perform distinguishing, and considers the HE NDPA frame as the VHT NDPA frame. Although a target station corresponding to the HE NDPA frame is the HE station, because the HE NDPA frame is usually sent in a broadcast manner, the VHT STA of an earlier version also receives the HE NDPA frame. Therefore, the following method is introduced to the HE NDPA frame to prevent the VHT STA (also referred to as a non-HE VHT STA) of the earlier version from misreading the HE NDPA frame as being sent to the VHT STA.

A station identifies, by using an association identifier in a station information field, whether a received NDPA frame is sent to the station. Because a STA of an earlier version does not identify a new NDPA frame variant (for example, the VHT station of the earlier version understands the HE NDPA frame as the VHT NDPA frame), the STA of the earlier version needs to be prevented from mistakenly considering a part of information in the NDPA frame with the new variant as an AID of the STA, and therefore mistakenly considering that the NDPA frame is sent to the STA of the earlier version. If misreading occurs, the STA of the earlier version performs unnecessary channel information calculation, resulting in waste of buffer resources and power consumption.

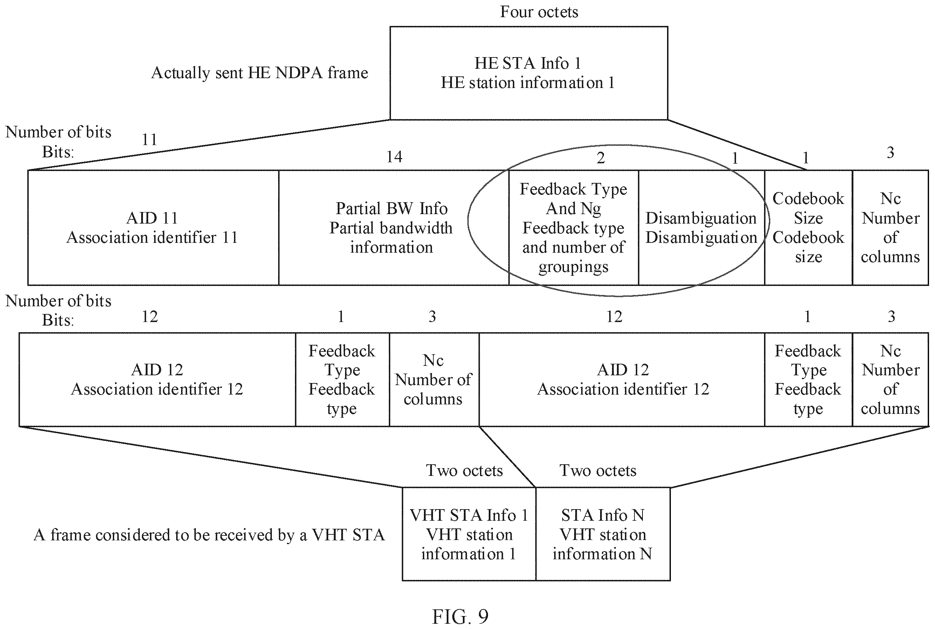

An example in which a VHT station of an earlier version reads one HE NDPA frame is used. FIG. 9 is a schematic diagram of reading the HE NDPA frame by the VHT station of the earlier version. As shown in FIG. 9, the VHT station of the earlier version considers a third octet and a fourth octet in a 4-octet station information field in the HE NDPA frame as a second station information field in a VHT NDPA frame, and considers first 12 bit information as a 12-bit association identifier subfield. If last 9 bits in a partial bandwidth information subfield, 2 bits in a feedback type and number of groupings subfield, and 1 bit in a disambiguation bit are exactly the same as an AID of the VHT station, misreading occurs in the VHT station. Therefore, the disambiguation bit is introduced into the HE NDPA frame, and a value of the disambiguation bit is forcibly set to 1. The bit corresponds to a most significant bit (most significant bit) in a 12-bit AID. When the most significant bit in the AID is 1, the AID is greater than or equal to 2048. In this case, the VHT STA reads the 12 bits as the AID greater than 2047. However, the 802.11 standard has not defined the AID greater than 2047. Therefore, the VHT STA of the earlier version considers the AID greater than 2047 as an AID of another STA, and therefore no misreading occurs. Because the 802.11 standard has not defined the AID greater than 2047, the HE NDPA frame reduces a number of bits of an association identifier to 11 bits, and saves 1 bit for transfer information. In addition, for a first octet and a second octet, because the AID 11 is set to an AID 11 of the HE STA, the AID 11 definitely does not match the AID of the VHT STA, and this prevents misreading.

In 802.11az, namely, in a ranging standard phase, a ranging (ranging) indication is introduced into B0 in a 1-octet sounding dialog token at an earliest stage of standard discussion. When B0 is 1, it indicates that the frame is a ranging NDPA frame. In addition, B1 is indicated as 0. Some earlier ranging STAs consider, if B1 and B0 are 0, that the received NDPA frame is the VHT NDPA frame; if B1 is 1, that the received NDPA frame is the HE NDPA frame; or if B0 is 1, that the received NDPA frame is the ranging NDPA frame. A later ranging STA distinguishes which of the three variants the received NDPA frame is based on both the two bits (namely, B0 and B1). The earlier (non-ranging) VHT STA does not identify which NDPA frame is, and understands the ranging NDPA frame as the VHT NDPA frame. Similarly, the earlier (non-ranging) HE STA does not identify whether the NDPA frame is the ranging NDPA frame, and only identifies whether the NDPA frame is the VHT NDPA frame or the HE NDPA frame based on the bit B1. Therefore, based on this indication method, the HE STA of the earlier version may understand the ranging NDPA frame as the VHT NDPA frame. The ranging NDPA frame has the same AID 11 and disambiguation bit, therefore the VHT STA of the earlier version does not misread. The HE STA of the earlier version considers the ranging NDPA frame as the VHT NDPA frame. However, the AID 11 and the disambiguation bit exist, the HE STA of the earlier version does not misread.

In 802.11be, namely, in an EHT standard phase, when both B0 and B1 in the sounding dialog token field are 1, it indicates that the frame includes an EHT variant, that is, the frame is an EHT NDPA frame. An EHT STA identifies that NDPA is EHT NDPA by using both B0 and B1 being 1. Some earlier ranging STAs may consider the EHT NDPA frame as the ranging NDPA frame. An HE STA of an earlier version may consider the EHT NDPA frame as the HE NDPA frame. A VHT STA of an earlier version still considers the EHT NDPA frame as the VHT NDPA frame. The EHT NDPA frame also has the same AID 11 and disambiguation bit, the VHT STA of the earlier version does not misread. The HE STA of the earlier version understands the EHT NDPA frame as the HE NDPA frame. However, the AID 11 exists, the HE STA of the earlier version does not misread.

It should be understood that, the VHT station of the earlier version mentioned in this specification is a station that supports the 802.11ac protocol but does not support the 802.11ax protocol and a later protocol. The HE station of the earlier version is a station that supports the 802.11ax protocol but does not support the 802.11be protocol and a later protocol. The ranging station of the earlier version is a station that supports the 802.11az protocol but does not support the 802.11be protocol and a later protocol. In a next generation (for example, 802.11bf) of the 802.11be standard, an EHT station that supports the 802.11be protocol but does not support the protocols later than 802.11be is referred to as the EHT station of the earlier version.

For ease of description, in subsequent descriptions of this specification, "the VHT station of the earlier version", "the HE station of the earlier version", "the ranging station of the earlier version", and "the EHT station of the earlier version" may also be directly referred to as a VHT station, an HE station, a ranging station, and an EHT station respectively.

It can be learned from the foregoing content that, an NDPA frame variant field (namely, B0 and B1 in the sounding dialog token field) has two bits in total, and can indicate only the four variants. In addition, the four variants have been used up, and cannot be further extended. In addition, a reason for preventing misreading between the EHT/ranging/HE STAs is that a length of the station information field is 4 octets, and a unified AID 11 indication is used for indication. If future 802.11 standards (such as 802.11bf, Wi-Fi 8, and Wi-Fi 9) need to carry common information, or a length of a station information field needs to be extended, the structure of the current NDPA frame cannot meet this requirement.

It should be understood that Wi-Fi 8 mentioned in this specification refers to the next-generation standard of 802.11be, Wi-Fi 9 refers to a next-generation standard of Wi-Fi 8, and the like. Therefore, a next-generation standard of Wi-Fi 9 is referred to as Wi-Fi 10, and the like.

Therefore, embodiments of this application provide the NDPA frame transmission method. A universal NDPA frame is designed, and can be applied to one or more generations of future 802.11 standards (such as 802.11bf, Wi-Fi 8, and Wi-Fi 9) to support channel sounding, and can prevent a STA of an earlier version from misreading. In addition, the NDPA frame can include common information and/or station information of a flexible length, to carry parameter information required by different features.

The following describes in detail the technical solutions provided in this application with reference to more accompanying drawings.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

It should be understood that the beamformer (Beamformer, BFer for short) in this application may be an AP or a STA, and the beamformee (Beamformee, BFee for short) may be a STA or an AP. This is not limited in this application.

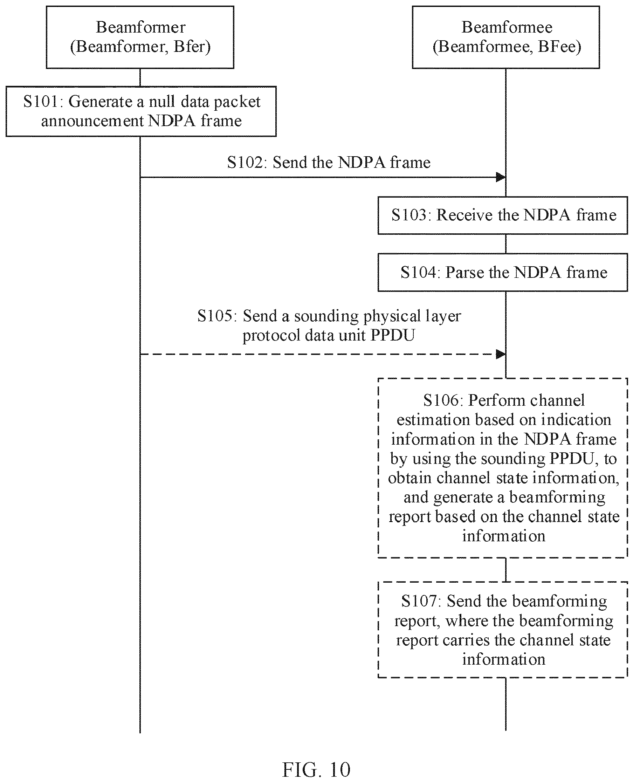

FIG. 10 is a schematic flowchart of an NDPA frame transmission method according to an embodiment of this application. As shown in FIG. 10, the NDPA frame transmission method includes but is not limited to the following steps.

S101: A beamformer (Beamformer, Bfer) generates a null data packet announcement NDPA frame.

S102. The beamformer sends the NDPA frame.

S103: A beamformee (Beamformee, BFee) receives the NDPA frame.

S104: The beamformee parses the NDPA frame.

Optionally, the beamformer in this embodiment of this application may support 802.11bf or future 802.11 standards (such as Wi-Fi 8 and Wi-Fi 9), and the beamformee may support any existing 802.11 series protocols, or may support future 802.11 standards, namely, 802.11bf or future 802.11 standards (such as Wi-Fi 8 and Wi-Fi 9).

In this embodiment of this application, the NDPA frame includes a plurality of fields and subfields. It should be understood that names of various fields and subfields in the NDPA frame are not limited in this embodiment of this application, and may be replaced with other names in another embodiment.

For ease of distinguishing from NDPA frames in several earlier generations of 802.11 standards (for example, 802.11ac/802.11ax/802.11az/802.11be), the NDPA frame in this embodiment of this application may also be referred to as a universal NDPA frame or have other names, and may still inherit a type and a subtype of a VHT NDPA frame. To be specific, a frame type subfield included in a frame control field is set to 01, to indicate a control frame, and a subtype subfield is set to 0101, to indicate an NDPA frame in the control frame.

Optionally, the beamformer (for example, an AP) generates and sends the NDPA frame, to notify the beamformee (for example, a STA) that needs to perform channel sounding, and sends a channel sounding related parameter. After receiving the NDPA frame, the beamformee (BFee) parses the NDPA frame to determine whether the beamformee needs to participate in channel sounding; and if determines that the beamformee needs to participate in channel sounding, continues to parse the NDPA frame to obtain the channel sounding related parameter.

The following describes in detail frame structures of the NDPA frame provided in this embodiment of this application. The NDPA frame provided in this embodiment of this application is applicable to one or more of future generations of 802.11 standards.

### Implementation 1

The NDPA frame (universal NDPA frame) in this embodiment of this application includes but is not limited to one or more of a frame control (frame control) field, a duration (duration) field, a receiving address (Receiving Address, RA) field, a transmitting address (Transmitting Address, TA) field, a sounding dialog token (Sounding Dialog Token) field, and the like. The NDPA frame further includes a first field and/or (one or more) station information fields. An NDPA variant field (two bits in total) included in the sounding dialog token field is set to 00, that is, B0 and B1 in the sounding dialog token field are set to 00. The first field may also be referred to as an extended common field or a special station information field, and the three fields may be used alternatively. Names of fields and subfields included in the NDPA frame are not limited in this embodiment of this application.

The first field (the extended common field or the special station information field) includes one or more disambiguation bits, each disambiguation bit is set to 1, bit positions of the one or more disambiguation bits in the first field are B11+16*k, and k is a natural number, namely, an integer greater than or equal to 0. Each station information field includes one or more disambiguation bits, each disambiguation bit is 1, bit positions of the one or more disambiguation bits in the station information field are B27+16*q, and q is an integer greater than or equal to -1.

It should be understood that a symbol "*" in this specification represents a meaning of "multiply" or "multiplying".

Optionally, a length of the first field (the extended common field or the special station information field) is an even-numbered octet, and represents 2*n. A length of each station information field is also an even-numbered octet, and represents 2*m. Both n and m are natural numbers, n and m cannot be 0 at the same time, and n+m is greater than 0. It may be understood that, when n is equal to 0, it indicates that the NDPA frame does not have the first field. Similarly, when m is equal to 0, it indicates that the NDPA frame does not have the station information field. Because the disambiguation bit is located in both the first field and the station information field, a bit position in which the disambiguation bit is located cannot exceed the length of the first field and the length of the station information field. Therefore, k is less than or equal to n-1, that is, k is 0, 1, 2, ..., and n-1; and q is less than or equal to m-2, that is, q is -1, 0, 1, 2, ..., and m-2.

Further, optionally, when n is equal to 0, that is, when the NDPA frame (the universal NDPA frame) does not have the first field, q may be equal to -1. In other words, if the NDPA frame does not have the first field, B11 in the station information field is a disambiguation bit and needs to be set to 1. Alternatively, if the NDPA frame (the universal NDPA frame) has the first field, a bit when q is equal to -1 may be used to transmit information, and is not used as a disambiguation bit. In addition, regardless of whether the NDPA frame (universal NDPA frame) has the first field, starting from a second station information field in a station information list field, bits when q=-1 may be used to transmit information, and are not used as a disambiguation bit.

It can be learned from the foregoing content that B11 (namely, a first disambiguation bit) in first two octets (may be the first field or the station information field) following the sounding dialog token field in the NDPA frame (universal NDPA frame) is set as the disambiguation bit, and may be used by the target STA to distinguish whether the NDPA frame is a VHT NDPA frame or the universal NDPA frame. Certainly, other disambiguation bits in the NDPA frame (universal NDPA frame) may also be used to distinguish whether the NDPA frame is the VHT NDPA frame or the universal NDPA frame. Therefore, the disambiguation bit can be used to avoid a waste of buffer resources and power consumption because a station of an earlier version (such as a VHT station, an HE station, a ranging station, or an EHT station) mistakenly considers, after receiving the universal NDPA frame, that the universal NDPA frame is sent to the station, and performs unnecessary channel information calculation.

Optionally, the NDPA frame (universal NDPA frame) may further include type information that indicates a variant type of the NDPA frame. The type information may be referred to as an NDPA variant extension subfield, or may have another name. This is not limited in this embodiment of this application. The NDPA variant extension subfield may be located before first station information field. In this way, when receiving the universal NDPA frame, the STA first obtains the type information/NDPA variant extension subfield from the universal NDPA frame, determines a variant of the universal NDPA frame based on the type information/NDPA variant extension subfield, and then determines, based on the variant of the universal NDPA frame, a reading policy for reading the station information field.

Optionally, n may be different and m may be different in each generation of 802.11 standard. n and m may be indicated by using first two octets in the first field (the extended common field or the special station information field) or the sounding dialog token field. For example, the first field or the sounding dialog token field includes first indication information and second indication information, the first indication information indicates n, and the second indication information indicates m. Alternatively, the first indication information and the second indication information may be one piece of information, in other words, both n and m are indicated by using one piece of information carried in the first field.

Optionally, n and m may also be implicitly indicated by using the NDPA variant extension subfield/type information. In other words, the variant type indicated by the NDPA variant extension subfield/type information is in a one-to-one correspondence with n and m. To be specific, n and m may be determined based on the variant type indicated by the NDPA variant extension subfield/type information.

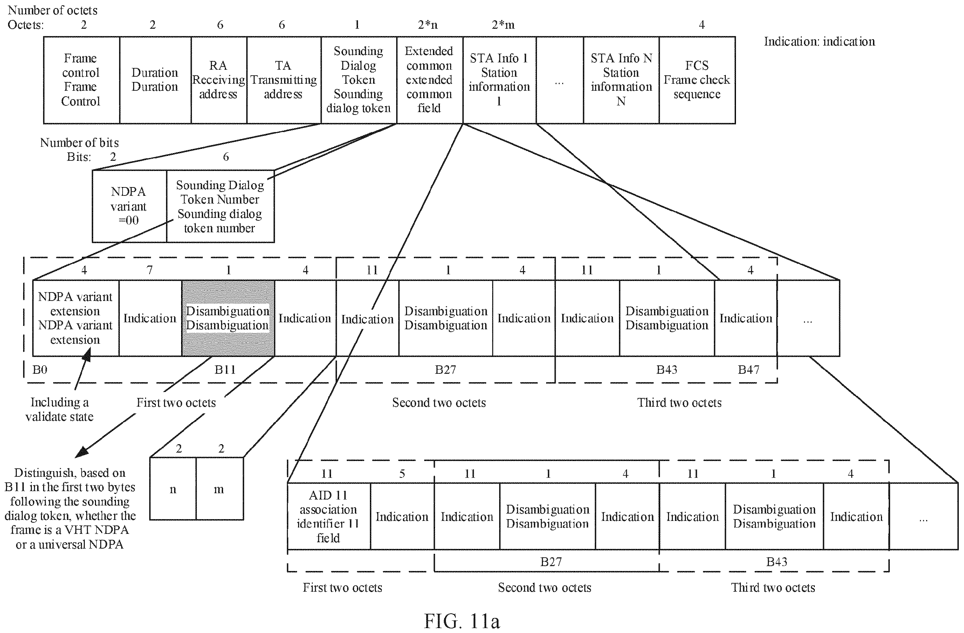

Optionally, the NDPA variant extension subfield/type information may be in the first field (the extended common field or the special station information field). For example, FIG. 11a is a schematic diagram of a first frame structure of the universal NDPA frame according to this embodiment of this application. As shown in FIG. 11a, the universal NDPA frame includes one extended common (extended common) field and/or one or more station information fields. A length of the extended common field is 2*n octets, and first four bits are an NDPA variant extension subfield that indicates a variant type of the NDPA frame. It should be understood that a length and a position of the NDPA variant extension subfield in the universal NDPA frame shown in FIG. 11a are merely examples. In actual implementation, the length and the position of the NDPA variant extension subfield may be set based on an actual situation. For example, the NDPA variant extension subfield may be on another indication (indication) bit in first two octets in the extended common field, and the length of the NDPA variant extension subfield may be 1 bit, 2 bits, 3 bits, or the like. This is not limited in this embodiment of this application. The extended common field further includes one or more disambiguation bits, and each disambiguation bit is set to 1. The extended common field may further include information that indicates n and m. A length of the indication information and a position of the indication information in the extended common field are not limited. Each station information field includes one AID 11 field that indicates least significant 11 bits of an association identifier of a station. Each station information field further includes one or more disambiguation bits, and each disambiguation bit is set to 1. The universal NDPA frame further includes a 1-octet sounding dialog token field, and B0 and B1 in the sounding dialog token field are set to 00. Indication (indication) information in FIG. 11a may be understood as a reserved bit, and indicates some channel sounding related parameters. A specific parameter to be indicated is not limited in this embodiment of this application.

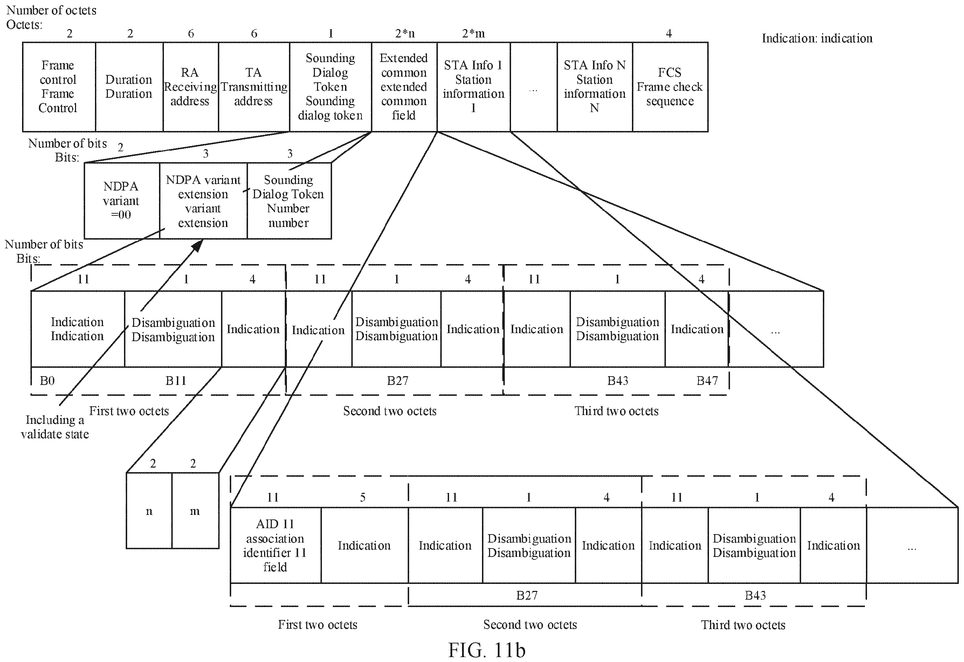

Optionally, in addition to using the extended common field (namely, the first field) to indicate the variant type of the NDPA frame, variant information of the NDPA frame may also be indicated by using the sounding dialog token field. In other words, the NDPA variant extension subfield/type information may be in the sounding dialog token field. For example, FIG. 11b is a schematic diagram of a second frame structure of the universal NDPA frame according to this embodiment of this application. As shown in FIG. 11b, the universal NDPA frame includes one extended common (extended common) field and/or one or more station information fields. The extended common field further includes one or more disambiguation bits, and each disambiguation bit is set to 1. Each station information field includes one AID 11 field that indicates least significant 11 bits of an association identifier of a station. Each station information field further includes one or more disambiguation bits, and each disambiguation bit is set to 1. The universal NDPA frame further includes a 1-octet sounding dialog token field, and B0 and B1 in the sounding dialog token field are set to 00. Some bits (for example, first three bits) of a 6-bit sounding dialog token number in the sounding dialog token field (with a length of 1 octet) may be used as an NDPA variant extension subfield, to indicate a variant type of the NDPA frame. The BFee (beamformee) may identify the NDPA frame as the universal NDPA frame based on a disambiguation bit or a special AID 11 (that is, an AID is greater than 2007) in first two octets following the sounding dialog token field, and learn of that some bits in the sounding dialog token number are an NDPA variant extension indication, to read a variant of the NDPA frame. Indication (indication) information in FIG. 11b may be understood as a reserved bit, and indicates some channel sounding related parameters. A specific parameter to be indicated is not limited in this embodiment of this application.

Optionally, the special AID 11 (for example, a value greater than 2007, or a value that is selected in a standard and that is less than 2007, and the value is not allocated to any STA) may be used to replace the first disambiguation bit (namely, B11 in the first two octets following the sounding dialog token field) in the NDPA frame (universal NDPA frame). It should be understood that, when the universal NDPA frame has a first field, the first disambiguation bit in the universal NDPA frame is B11 in the first field; or when the universal NDPA frame does not have a first field, the first disambiguation bit in the universal NDPA frame is B11 in a first station information field.

In an example, the universal NDPA frame has the first field, and the special AID 11 is used to replace the disambiguation bit in the first two octets in the first field (namely, the extended common field). In other words, the first two octets in the first field (namely, the extended common field) may include an association identifier field, and a value of the association identifier field is greater than 2007. The association identifier field is at first 11 bits in the first two octets in the first field (namely, the extended common field). Because the first two octets in the first field (namely, the extended public field) include the special AID 11 (that is, the AID is greater than 2007), the special AID 11 can also prevent the STA of the earlier version from misreading. Therefore, the disambiguation bit may not be set in the first two octets in the first field (namely, the extended common field). In this case, k is a positive integer, that is, k is 1, 2, 3, ..., and n-1. For example,

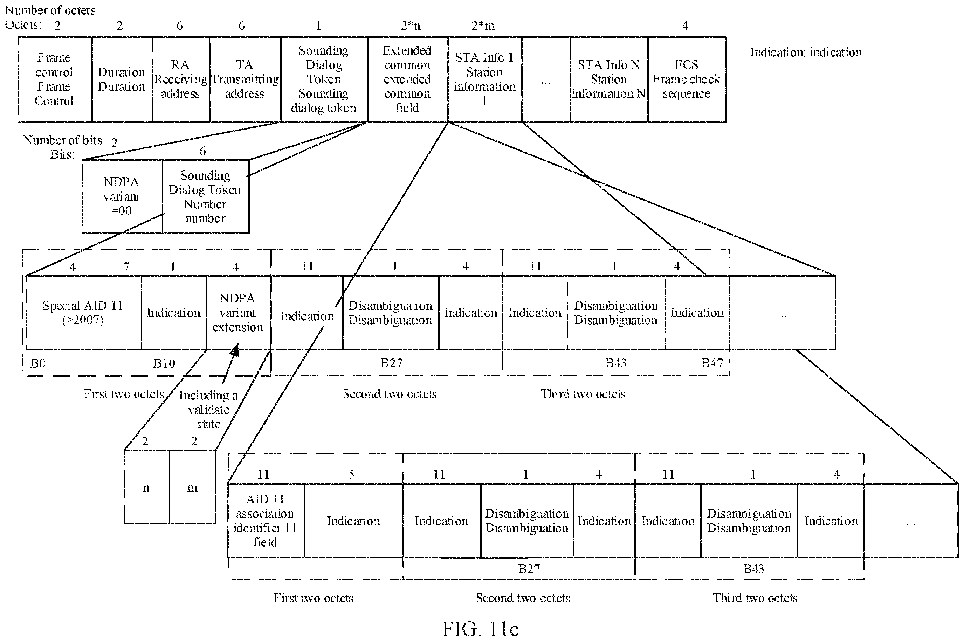

FIG. 11c is a schematic diagram of a third frame structure of the universal NDPA frame according to this embodiment of this application. As shown in FIG. 11c, compared with that in the universal NDPA frame shown in FIG. 11a, a difference lies in that: first 11 bits in first two octets in an extended common field are a special AID 11 field, and a value of the special AID 11 field is greater than 2007, for example, 2047. In addition, B11 in the extended common field in FIG. 11c is not a disambiguation bit, and may indicate some channel sounding related parameters. A specific parameter to be indicated is not limited in this embodiment of this application.

It should be understood that a plurality of special AIDs 11 may be used to replace a plurality of disambiguation bits in the first field (namely, the extended common field). Correspondingly, k changes accordingly. In other words, every two octets in the first field (namely, the extended common field) include one special AID 11 or one disambiguation bit. It should be further understood that, if the special AID 11 is used in every two octets in the first field (namely, the extended common field), the first field (namely, the extended common field) may not have the disambiguation bit.

It can be learned that, because an NDPA variant field (B0 and B1 in the sounding dialog token field) is set to 00, the VHT STA, the HE STA, the ranging STA, and the EHT STA all understand the universal NDPA frame as a VHT NDPA frame, and then read the universal NDPA frame in behavior of the VHT STA, that is, identify an AID 12 every two octets. Therefore, in this embodiment of this application, one AID 11 or one disambiguation bit (forced to be 1) is set every two octets (there needs to have one disambiguation bit or one special AID 11 (that is, a value of the AID greater than 2007) except for the first two octets) following the sounding dialog token field, to prevent misreading by the STA of the earlier version. Therefore, implementation is flexible, and overheads are low. In addition, an NDPA extension variant subfield further indicates the frame is a variant NDPA frame in a future standard. B11 in the first two octets following the sounding dialog token field may be used to distinguish whether the frame is the universal NDPA frame or the VHT NDPA frame. In other words, the VHT STA may determine, based on B11 in the first two octets following the sounding dialog token field, whether the received NDPA frame is the universal NDPA frame or the VHT NDPA frame. For example, if B11 in the first two octets following the sounding dialog token field is 1, the NDPA frame is the universal NDPA frame.

Optionally, when a value of the NDPA variant extension subfield is any value within a first value range, it indicates that the NDPA variant extension subfield is set to a validate (Validate) state. In other words, there is an entry in a validate state in the NDPA variant extension field. When the value of the NDPA variant extension subfield is a first value, the NDPA variant extension subfield indicates that the variant type may be a first variant type, for example, an EHT R2 variant, in other words, the NDPA frame is an EHT R2 NDPA frame; or when the value of the NDPA variant extension subfield is a second value, the NDPA variant extension subfield indicates that the variant type may be a second variant type, for example, a sensing (sensing) variant, in other words, the NDPA frame is a SENSING NDPA frame. For example, an example of an indication of the NDPA variant extension subfield is shown in Table 2. A value of the NDPA variant extension subfield shown in a first column in Table 2 is represented in binary, and correspondingly, may also be represented in decimal. A length of the NDPA variant extension subfield is 4 bits, the first value is 0 (decimal), the second value is 1 (decimal), and the first value range is from 2 to 15 (decimal).

**Table 2: Indication of the NDPA variant extension subfield**

| Value (value) of the NDPA variant extension subfield | Variant (variant) |
|---|---|
| 0000 | EHT R2 |
| 0001 | SENSING (sensing) |
| Others (0010-1111) | Validate (validate) |

In Table 2, when the value of the NDPA variant extension subfield is 0 (decimal), it indicates the frame is the NDPAframe of the EHT R2 version. When the value of the NDPA variant extension subfield is 1 (decimal), it indicates that the frame is the sensing NDPA frame in the 802. 11bf standard. When the value of the NDPA variant extension subfield is 2 to 15 (decimal), the NDPA variant extension subfield is in the validate state. This can prevent the station of the earlier version (for example, the EHT R2 station or the SENSING STA) in the future 802.11 standards from misreading a universal NDPA frame variant (for example, a universal NDPA frame variant corresponding to the extension subfield whose value is 2 to 15) of a later version (not defined). Even if lengths and formats of fields in NDPA frames of the 802.11 standards of each generation are different, the fields do not affect each other. Because the 802.11 standards of each generation may define a variant of an NDPA frame of the 802.11 standards of each generation, and the variant is indicated by using the NDPA variant extension subfield. The station (such as the EHT R2 station or the SENSING STA) of the earlier version in the future 802.11 standards may misread the universal NDPA frame of the later version. Therefore, it is only necessary to prevent the VHT/HE/ranging/EHT (R1) STA from misreading the universal NDPA frame (this is mainly implemented by setting B0 and B1 in the sounding dialog token field to 00+AID 11+disambiguation bit). It should be understood that Table 2 is merely an example, and does not limit a correspondence between a value of the NDPA variant extension subfield and a meaning. For example, the NDPA frame of the EHT R2 version may use a same frame format as that of the EHT NDPA frame shown in FIG. 7, and does not use that of the universal NDPA frame provided in this embodiment of this application. The universal NDPA frame provided in this embodiment of this application is used starting from the 802.11bf standard.

It should be understood that the 802.1The standard has two releases. The first release (Release 1, R1) relates to only some basic features, and the second release (Release 2, R2) further relates to some other to-be-determined features. To distinguish devices in the two releases, a device in the first release is referred to as a device implementing an EHT basic feature (In the standard, an attribute value dot11EHTBaseLineFeaturesImplementedOnly being 1 in a management information base is used for representation); and a device in the second release can be referred to as a device without implementing an EHT basic feature or a device implementing an EHT advanced feature (dot11EHTBaseLineFeaturesImplementedOnly is 0). This is not limited in this embodiment of this application. "EHT R2" in Table 2 indicates a variant of an NDPA frame in the second release of the 802. 1 The standard.

In addition, in the 802.11be standard, a reserved/unused bit (reserved bits) in a signaling field in a physical layer preamble, or a reserved/unused state (entry) of a (sub) field has the following two types: disregard (Disregard) and validate (Validate). If one device implementing the EHT basic feature finds that a validate (Validate) bit in a PPDU is not set to a default (default) value specified in the standard, or values of some subfields are set to a validate state, the device needs to wait until the PPDU ends (defer for duration of the PPDU), then transfers related information (such as a basic service set color and transmission opportunity information) in a version-independent field to a MAC layer, to ensure coexistence, and terminates reception of the PPDU. For a disregard (Disregard) bit or a subfield that is set to a disregard (Disregard) state, if an EHT device does not find the foregoing condition (that is, the validate bit is not set to the default (default) value specified in the standard, or the values of some subfields are set to the validate state), the EHT device ignores the disregard (Disregard) bit or the subfield that is set to the disregard (Disregard) state, and continues reading other following fields.

It can be learned that, when receiving and parsing the NDPA frame, if the beamformee (for example, the STA) obtains, through parsing, that the NDPA variant extension subfield in the NDPA frame is set to the validate state, or obtains, through parsing, that the value of the NDPA variant extension subfield is not set to a default (default) value, the beamformee (for example, the STA) stops parsing a field following the NDPA variant extension subfield.

Optionally, the first field (namely, the extended common field or the special station information field) may further include some parameters about channel sounding. For example, in an AP coordinated channel sounding scenario, the extended common field may further include third indication information and fourth indication information. The third indication information indicates a number of access points participating in channel sounding, and the fourth indication information indicates an identifier of each access point participating in channel sounding. In addition, the station information field may further include access point identifier information, and the access point identifier information indicates an access point associated with a station indicated by the station information field.

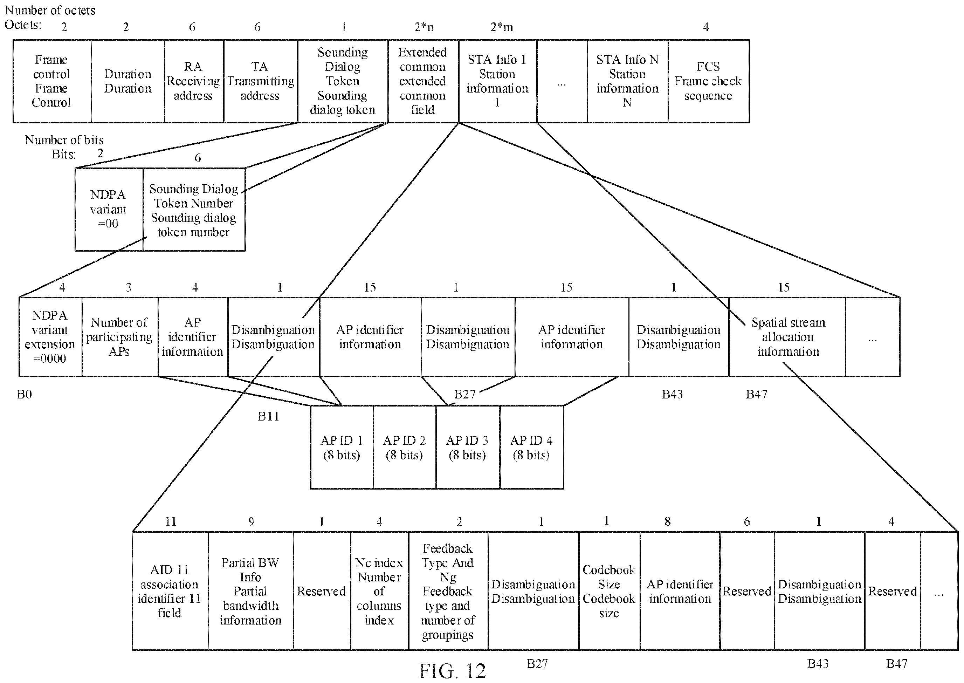

FIG. 12 is a schematic diagram of a frame structure of the universal NDPA frame in an AP coordinated channel sounding process according to this embodiment of this application. As shown in FIG. 12, an NDPA variant extension subfield in the universal NDPAframe is 0, to indicate the frame is an EHT R2 variant. A number of APs participating in (channel sounding) and identifier information of each AP participating in (channel sounding) are indicated in an extended common field. Each piece of information may be distributed in bits separated by disambiguation bits. For example, as shown in FIG. 12, it is assumed that each AP identifier information is 8 bits, and a total number of APs participating in channel sounding is 4, 32 bits are required, and may be separately distributed in 4 bits, 15 bits, and 15 bits that are separated by the disambiguation bits (B11 and B27) in the extended common field. In addition to the information required by each STA in the EHT NDPA frame, the station information field may further include AP identifier information that indicates an AP to which a STA is associated. Optionally, the extended common field may further include spatial stream allocation information that indicates a number of spatial streams and a spatial stream sequence in each AP participating in channel sounding.

### Implementation 2

The NDPA frame (universal NDPA frame) in this embodiment of this application includes but is not limited to one or more of a frame control (frame control) field, a duration (duration) field, a receiving address (Receiving Address, RA) field, a transmitting address (Transmitting Address, TA) field, a sounding dialog token (Sounding Dialog Token) field, and the like. The NDPA frame further includes a first field and/or (one or more) station information fields. An NDPA variant field (two bits in total) included in a sounding dialog token field is set to any one of 01, 10, and 11. In other words, B0 and B1 in the sounding dialog token field are set to any one of 01, 10, and 11. The first field may also be referred to as an extended common field or a special station information field, and the three fields may be used alternatively. Names of fields and subfields included in the NDPA frame are not limited in this embodiment of this application.

A length of the first field (the extended common field or the special station information field) and a length of each station information field are a multiple of four octets. The length of the first field (the extended common field or the special station information field) is represented as 4*n octets, and the length of each station information field is represented as 4*m octets. Both n and m are natural numbers, n and m cannot be 0 at the same time, and n+m is greater than 0. It may be understood that, when n is equal to 0, it indicates that the NDPA frame does not have the first field. Similarly, when m is equal to 0, it indicates that the NDPA frame does not have the station information field. Every four octets in the first field include an AID 11 field (also referred to as a special AID 11 field) whose value is greater than 2007 and a disambiguation bit. The disambiguation bit is set to 1, and a bit position of the disambiguation bit in the first field is B27+32*k. k is a natural number, and k is less than or equal to n-1, that is, k is 0, 1, 2, ..., and n-1. Every four octets in each station information field include an AID 11 field whose value is less than or equal to 2007 and a disambiguation bit. The disambiguation bit is set to 1, and a bit position of the disambiguation bit in the station information field is B27+32*q. q is a natural number, and q is less than or equal to m-1, that is, q is 0, 1, 2, ..., and m-1.

Optionally, the AID 11 field is in first 11 bits of every four octets in the first field (the extended common field or the special station information field) and each station information field. In other words, the AID 11 field (also referred to as the special AID 11 field) whose value is greater than 2007 is the first 11 bits of every four octets in the first field. Similarly, the association identifier 11 field whose value is less than or equal to 2007 is the first 11 bits of every four octets in the station information field.

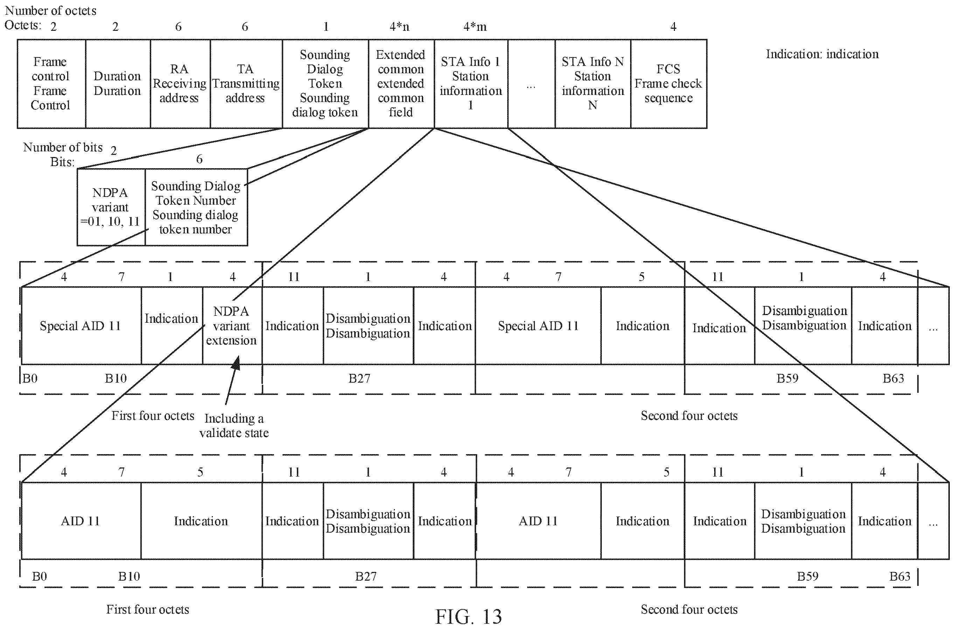

Optionally, the NDPA frame (universal NDPA frame) may further include the NDPA variant extension subfield that indicates a variant type of the NDPA frame. In an implementation, the NDPA variant extension subfield may be in the first field (the extended common field or the special station information field), or the NDPA variant extension subfield may be in the station information field. FIG. 13 is a schematic diagram of a fourth frame structure of the universal NDPA frame according to this embodiment of this application. As shown in FIG. 13, the universal NDPA frame includes one extended common (extended common) field and/or one or more station information fields. Every four octets in the extended common field include a special AID 11 (greater than 2007) and a disambiguation bit, where the disambiguation bit is set to 1. Every 4 octets in each station information field include an AID 11 and a disambiguation bit, and the disambiguation bit is set to 1. The universal NDPA frame further includes a 1-octet sounding dialog token field, and B0 and B1 in the sounding dialog token field are set to any one of 01, 10, and 11. Indication (indication) information in FIG. 13 may be understood as a reserved bit, and indicates some channel sounding related parameters. A specific parameter to be indicated is not limited in this embodiment of this application.

When an NDPA variant field (B0 and B1 in the sounding dialog token field) is set to 01, the HE STA, the ranging STA, and the EHT STA all understand the universal NDPA frame as the HE NDPA frame, and then read the universal NDPA frame in behavior of the HE STA, that is, identify an AID 11 every four octets. Similarly, when an NDPA variant field (B0 and B1 in the sounding dialog token field) is set to 10, both the ranging STA and the EHT STA understand the universal NDPA frame as the ranging NDPA frame, and then read the universal NDPA frame in behavior of the ranging STA, that is, identify an AID 11 every four octets. When an NDPA variant field (B0 and B1 in the sounding dialog token field) is set to 11, the EHT STA understands the universal NDPA frame as the ranging NDPA frame, and then reads the universal NDPA frame according to the EHT standard, that is, identifies an AID 11 every four octets. In other words, when an NDPA variant field (B0 and B1 in the sounding dialog token field) is set to a value other than 00, the device of earlier version understands the universal NDPA frame as a 4-octet station information field to identify an AID 11, and the VHT STA understands the universal NDPA frame as the VHT NDPA frame and identifies an AID 12 every two octets. Therefore, in this embodiment of this application, it is ensured that every four octets following the sounding dialog token field have one AID 11 (the AID 11 may be the target STA (target BFee), or may be the special AID 11) and one disambiguation bit (forcibly set to 1), to prevent the STAs (namely, the VHT STA, the HE STA, the ranging STA, and the EHT STA) of the earlier version from misreading the AID 11 as the STAs'.

In another implementation, in addition to being in the extended common field, the NDPA variant extension subfield may be in the sounding dialog token field. For details, refer to corresponding descriptions in the foregoing Implementation 1 (as shown in FIG. 11b). Details are not described herein again.

Optionally, n may be different and m may be different in each generation of 802.11 standard. n and m may be indicated by using first two octets in the first field (the extended common field or the special station information field) or the sounding dialog token field; or n and m may also be implicitly indicated by using the NDPA variant extension subfield/type information.

Optionally, when a value of the NDPA variant extension subfield is any value within a first value range, it indicates that the NDPA variant extension subfield is set to a validate (Validate) state. For details, refer to the corresponding description in the foregoing Implementation 1. Details are not described herein again.

Optionally, the first field (namely, the extended common field or the special station information field) may further include some parameters about channel sounding. For details, refer to the corresponding description in the foregoing Implementation 1. Details are not described herein again.

Optionally, after step S102, the beamformee may start to perform channel measurement, which includes but is not limited to the following steps.

S105: The beamformer sends a sounding physical layer protocol data unit PPDU. Correspondingly, the beamformee receives the sounding PPDU (sounding PPDU).

Optionally, after sending the NDPA frame (universal NDPA frame), the beamformer sends the sounding PPDU (sounding PPDU) after one SIFS. The sounding PPDU is used by a receiving end/beamformee to estimate a channel and obtain channel state information (CSI). The sounding PPDU may not include a data field, that is, does not carry a MAC frame. Certainly, if necessary, the data field may also be carried in the sounding PPDU.

Correspondingly, after receiving the NDPA frame (universal NDPA frame), the beamformee (Bfee) receives the sounding PPDU based on the channel sounding related parameter obtained from the NDPA frame.

Optionally, the sounding PPDU includes a universal signal (Universal Signal, U-SIG) field. The U-SIG field includes a physical layer version indication subfield that indicates a physical layer version of the sounding PPDU. The physical layer version of the sounding PPDU is consistent with the variant type indicated by the NDPA variant extension subfield in the NDPA frame (namely, the universal NDPA frame). For example, if the physical layer version indication subfield in the 802. 1 The standard is 0, it indicates that the physical layer version of the sounding PPDU is an EHT; and the variant type indicated by the NDPA variant extension subfield is the EHT NDPA frame or the EHT R2 variant universal NDPA frame.

For example, it is assumed that an indication of the NDPA variant extension subfield in the Wi-Fi 8 standard is shown in the following Table 3. The Wi-Fi 8 standard herein is a next-generation standard of the 802.11be standard. It is assumed that a physical layer version indication subfield in a sounding PPDU in the future Wi-Fi 8 is 1, the NDPA variant extension subfield in a corresponding universal NDPA frame is 2, namely, an entry corresponding to the NDPA variant extension subfield is 2 in the following Table 3.

**Table 3: Indication of the NDPA variant extension subfield in the Wi-Fi 8 standard**

| Value (value) of the NDPA variant extension subfield | Variant |
|---|---|
| 0000 | EHT R2 |
| 0001 | SENSING (sensing) |
| 0010 | Wi-Fi 8 |
| Others (0010-1111) | Validate (validate) |

In addition, when the EHT R2 device or a sensor device of the earlier version reads the NDPA frame variant in the NDPA variant extension subfield whose value is 2 (binary 0010), because for the EHT R2 device or the sensor device, the value is not set to a default/default value specified in the standard (the default/default value corresponding to the EHT R2 device is 0 (binary 0000), and the default/default value corresponding to the sensor device is 1 (binary 0001)), the EHT R2 device or the sensing device considers that the NDPA variant extension subfield is set to the validate state at this time, and stops parsing the field following the NDPA variant extension subfield. This prevents misreading, reduces unnecessary channel information calculation, and reduces waste of buffer resources and power consumption.

Optionally, the variant type of the NDPA frame may also be indicated in the physical layer version indication subfield in the U-SIG field. The variant types of the NDPA frames may be in a one-to-one correspondence with the physical layer versions, or may be in a many-to-one correspondence with the physical layer versions.

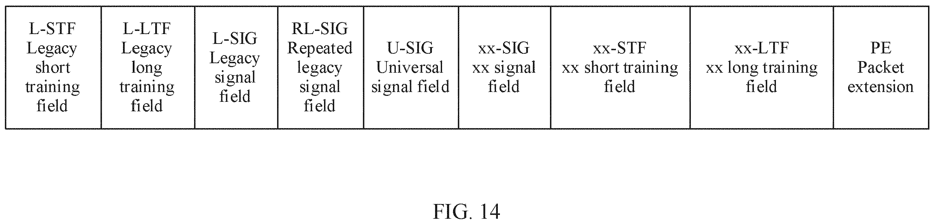

Optionally, refer to FIG. 14. FIG. 14 is a schematic diagram of a frame structure of the sounding PPDU according to this embodiment of this application. As shown in FIG. 14, the sounding PPDU includes a preamble (preamble) and packet extension (Packet Extension, PE). The preamble includes but is not limited to the following fields: a legacy short training field (Legacy Short Training Field, L-STF), a legacy long training field (Legacy Long Training Field, L-LTF), a legacy signal field (Legacy Signal Field, L-SIG), a repeated legacy signal field (Repeated L-SIG, RL-SIG), the U-SIG field, an xx-SIG (representing a signal field of a specific generation of standard), an xx-STF (xx Short Training Field, xx short training field), an xx-LTF (xx Long Training Field, xx throughput rate long training field), and the like.

It should be understood that "xx" in FIG. 14 is a representative of the future standard. For example, the 802.11n standard is HT, the 802.11ac standard is VHT, the 802.11ax standard is HE, the 802.11be standard is EHT, and the 802.11az standard is ranging. A specific name of the future standard is not limited in this embodiment of this application.

The L-STF, the L-LTF, and the L-SIG are used to ensure coexistence of a new device and a conventional device. The L-SIG includes a length field that may indirectly indicate duration after the L-SIG in the sounding PPDU. The RL-SIG is used to enhance reliability of the legacy signal field (L-SIG), and further provides an automatic detection method for the receiving end to help the receiving end identify that the data packet (namely, the sounding PPDU) is an EHT PPDU by detecting features such as whether the two symbols of the RL-SIG and the L-SIG are the same and a remainder of a length in the L-SIG. The U-SIG is in a PPDU in the 802.11be standard and several subsequent generations of standards, and a version-related indication in the U-SIG further indicates that the sounding PPDU is the EHT PPDU and a subsequent generation of standard PPDU. The xx-SIG provides information required for receiving the sounding PPDU. The xx-STF and the xx-LTF are respectively used for automatic gain control and channel estimation in the xx standard (for example, a standard after 802.11bf, Wi-Fi 8, or Wi-Fi 9). The packet extension provides more time for the receiving end to process data.

It should be understood that a sequence of performing step S 105 and performing step S 103 and step S 104 in this embodiment of this application is not limited. For example, step S105 is performed before step S 103 and step S 104, or step S 105 is performed after step S 103 and step S 104, or step S 105 and step S 103 and step S 104 are performed simultaneously/concurrently.

S 106: The beamformee performs channel estimation based on the indication information in the NDPA frame by using the sounding PPDU, to obtain the channel state information, and generates a beamforming report based on the channel state information.

S 107: The beamformee sends the beamforming report, where the beamforming report carries the channel state information. Correspondingly, the beamformer receives the beamforming report.

Optionally, the beamformee (Bfee) determines, based on the AID subfield in the station information field in the NDPA frame (universal NDPA frame), whether the AID subfield is consistent with the AID of the beamformee (Bfee). If the AID subfield is consistent with the AID of the beamformee, the beamformee (Bfee) determines that the beamformee needs to perform channel sounding. The beamformee (Bfee) may determine, based on the partial bandwidth information subfield in the station information field, a frequency range in which the channel state information needs to be fed back, and then perform channel estimation based on the sounding PPDU, to obtain the channel state information within the frequency range in which the station needs to feed back the channel state information. Alternatively, the Bfee may further determine, based on the Nc, the number of columns of the compressed beamforming feedback matrix, where the compressed beamforming feedback matrix is a part of the beamforming report, and the compressed beamforming feedback matrix carries at least a part of the channel state information. After obtaining the channel state information, the beamformee (Bfee) generates the beamforming report based on the channel state information and sends the beamforming report to the beamformer. The beamforming report carries the channel state information.

Optionally, in a trigger-based (multi-user) channel state information feedback process, after step S 105 and before step S107, the NDPA frame transmission method further includes: The beamformer sends a trigger frame including a beamforming poll subtype, for example, a BRP trigger frame, to trigger one or more beamformees to feed back the beamforming reports. The beamforming report is generated based on the indication information in the universal NDPA frame.

Certainly, a channel measurement procedure in embodiments of this application is not limited to the solution of step S105 to step S107 provided in this embodiment of this application. Optionally, the channel measurement procedure may alternatively be that another beamformer sends a sounding PPDU, and the beamformee performs measurement based on the sounding PPDU.

In this embodiment of this application, the universal NDPA frame is designed, and can be applied to one or more future generations of 802.11 standards to support channel sounding; and the universal NDPA frame may include common information and station information of a flexible length, to carry parameter information required by different features. In addition, the NDPA variant extension subfield including the validate state is further designed to indicate that universal NDPA frame is the variant of the future generation of standard, and the disambiguation bit and the special AID 11 (greater than 2007) are designed, to prevent the STA of the earlier version from misreading, reduce unnecessary channel information calculation, and reduce waste of buffer resources and power consumption.

In an optional embodiment, it can be learned from the foregoing "NDPA frame misreading prevention manners in different 802.11 standards" that, in 802.1 1be, that is, in the EHT standard phase, when B0 and B1 in the sounding dialog token field are 1, it indicates that the frame is the EHT variant, namely, the EHT NDPA frame. Some earlier ranging STAs may understand the EHT NDPA frame as the ranging NDPA frame. However, how to process the EHT NDPA frame received by a later ranging STA is not clear. This embodiment of this application provides a processing manner after the later ranging STA receives the EHT NDPA frame. Specifically, the later (or new-version) ranging STA receives the NDPA frame, and B0 and B1 in the sounding dialog token field in the NDPA frame are 1, to indicate that the frame is the EHT variant. The ranging STA of the new version distinguishes, based on B0 and B1 in the sounding dialog token field, the NDPA frame variant is the NDPA frame variant (namely, the VHT variant, the HE variant, or the ranging variant). Therefore, for the ranging STA of the new version, that B0 and B1 in the sounding dialog token field are set to 11 may be understood as that B0 and B 1 are set to the validate state, and the ranging STA of the new version stops parsing fields following B0 and B1 in the sounding dialog token field. This prevents misreading, reduces unnecessary channel information calculation, and reduces waste of buffer resources and power consumption.

The foregoing content describes in detail the method provided in this application. To facilitate implementation of the foregoing solutions in embodiments of this application, embodiments of this application further provide corresponding apparatuses or devices.

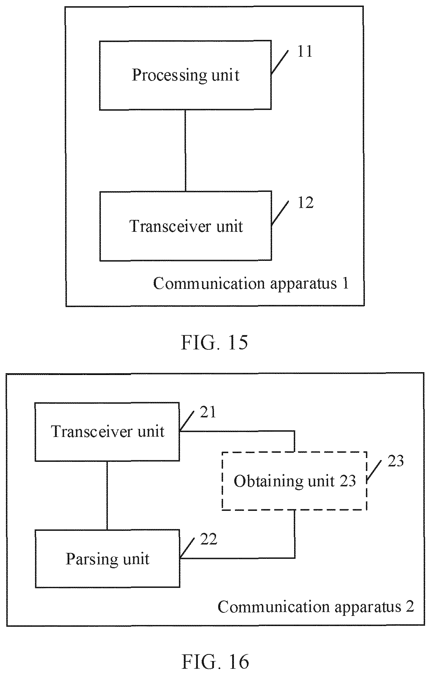

In embodiments of this application, division into function modules may be performed on the beamformer and the beamformee based on the foregoing method example. For example, each function module may be obtained through division based on each corresponding function, or two or more functions may be integrated into one processing module. The integrated module may be implemented in a form of hardware, or may be implemented in a form of a software function module. It should be noted that, in embodiments of this application, division into modules is an example, and is merely a logical function division. In actual implementation, another division manner may be used. The following describes in detail communication apparatuses in embodiments of this application with reference to FIG. 15 to FIG. 17. The communication apparatus is an AP and a STA. Further, the communication apparatus may be an apparatus in the AP, or the communication apparatus is an apparatus in the STA.

When an integrated unit is used, refer to FIG. 15. FIG. 15 is a schematic diagram of a structure of a communication apparatus 1 according to an embodiment of this application. The communication apparatus 1 may be a beamformer, and may be specifically an AP or a chip in the AP, for example, a Wi-Fi chip. As shown in FIG. 15, the communication apparatus 1 includes a processing unit 11 and a transceiver unit 12.

In a first design, the processing unit 11 is configured to generate an NDPA frame, where an NDPA variant field included in the NDPA frame is set to 00, and the NDPA frame includes a first field and/or a station information field; and the transceiver unit 12 is configured to send the NDPA frame, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

Optionally, in the first design, first two octets in the first field include an association identifier field, and a value of the association identifier field is greater than 2007. k is a natural number greater than or equal to 1.

In a second design, the processing unit 11 is configured to generate an NDPA frame, where an NDPA variant field included in the NDPA frame is set to any one of 01, 10, and 11, and the NDPA frame includes a first field and/or a station information field; and the transceiver unit 12 is configured to send the NDPAframe, where every four octets in the first field include a special association identifier 11 field and a disambiguation bit, the disambiguation bit is 1, a bit position of the disambiguation bit in the first field is B27+32*k, and k is a natural number; and every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets. A value of the special association identifier 11 field herein is greater than 2007, or is a value that is selected in a standard and that is less than 2007, and the value is not allocated to any STA.

Optionally, in the second design, the special association identifier 11 field is first 11 bits in every four octets in the first field, and the association identifier 11 field whose value is less than or equal to 2007 is first 11 bits in every four octets in the station information field.

Optionally, in the foregoing two designs, the NDPA frame includes an NDPA variant extension subfield, and the NDPA variant extension subfield indicates a variant type of the NDPA frame.

Optionally, in the foregoing two designs, the NDPA variant extension subfield is in the first field in the NDPA frame, or the NDPA variant extension subfield is in a sounding dialog token field in the NDPA frame.

Optionally, in the foregoing two designs, when a value of the NDPA variant extension subfield is any value within a first value range, it indicates that the NDPA variant extension subfield is set to a validate (Validate) state.

Optionally, in the foregoing two designs, a length of the first field is 2*n octets, a length of the station information field is 2*m octets, both n and m are natural numbers, and m+n is greater than 0; and k is less than or equal to n-1, and q is less than or equal to m-2.

Optionally, in the foregoing two designs, n and m are determined based on the variant type indicated by the NDPA variant extension subfield in the NDPA frame.

Optionally, in the foregoing two designs, the first field or the sounding dialog token field in the NDPA frame includes first indication information and second indication information; and the first indication information indicates n, and the second indication information indicates m.

Optionally, in the foregoing two designs, first two octets in the first field include an association identifier field, and a value of the association identifier field is greater than 2007, and k is a natural number greater than or equal to 1.

Optionally, in the foregoing two designs, the transceiver unit 12 is further configured to send a sounding physical layer protocol data unit PPDU; and the transceiver unit 12 is further configured to receive a beamforming report, where the beamforming report carries channel state information.

Optionally, in the foregoing two designs, the sounding PPDU includes a universal signal U-SIG field, a physical layer version indication subfield included in the U-SIG field indicates a physical layer version of the sounding PPDU, and the physical layer version of the sounding PPDU is consistent with the variant type indicated by the NDPA variant extension subfield in the NDPA frame.

It should be understood that the communication apparatus 1 may correspondingly perform the foregoing embodiment, and the foregoing operations or functions of the units in the communication apparatus 1 are separately used to implement corresponding operations of the beamformer in the foregoing embodiment. For brevity, details are not described herein again.

FIG. 16 is a schematic diagram of a structure of a communication apparatus 2 according to an embodiment of this application. The communication apparatus 2 may be a beamformee, and may be specifically a STA or a chip in the STA, for example, a Wi-Fi chip. As shown in FIG. 16, the communication apparatus 2 includes a transceiver unit 21 and a parsing unit 22.

In a first design, the transceiver unit 21 is configured to receive an NDPA frame, where an NDPA variant field included in the NDPA frame is set to 00, and the NDPA frame includes a first field and/or a station information field; and the parsing unit 22 is configured to parse the NDPA frame, where the first field includes one or more disambiguation bits, each disambiguation bit is 1, bit positions of the one or more disambiguation bits in the first field are B11+16*k, and k is a natural number; and the station information field includes one or more disambiguation bits, each disambiguation bit is 1, bit positions of the one or more disambiguation bits in the station information field are B27+16*q, and q is an integer greater than or equal to -1.

Optionally, in the first design, first two octets in the first field include an association identifier field, and a value of the association identifier field is greater than 2007. k is a natural number greater than or equal to 1.

In a second design, the transceiver unit 21 is configured to receive an NDPA frame, where an NDPA variant field included in the NDPA frame is set to any one of 01, 10, and 11, and the NDPA frame includes a first field and/or a station information field; and the parsing unit 22 is configured to parse the NDPA frame, where every four octets in the first field include a special association identifier 11 field and a disambiguation bit, the disambiguation bit is 1, a bit position of the disambiguation bit in the first field is B27+32*k, and k is a natural number; and every four octets in the station information field include an association identifier 11 field whose value is less than or equal to 2007 and a disambiguation bit, the disambiguation bit is 1, a bit position of the disambiguation bit in the station information field is B27+32*q, and q is a natural number. A length of the first field and a length of the station information field are a multiple of four octets. A value of the special association identifier 11 field herein is greater than 2007, or is a value that is selected in a standard and that is less than 2007, and the value is not allocated to any STA.

Optionally, in the second design, the special association identifier 11 field is first 11 bits in every four octets in the first field, and the association identifier 11 field whose value is less than or equal to 2007 is first 11 bits in every four octets in the station information field.

Optionally, in the foregoing two designs, the NDPA frame includes an NDPA variant extension subfield, and the NDPA variant extension subfield indicates a variant type of the NDPA frame.

Optionally, in the foregoing two designs, the NDPA variant extension subfield is in the first field in the NDPA frame, or the NDPA variant extension subfield is in a sounding dialog token field in the NDPA frame.

Optionally, in the foregoing two designs, when a value of the NDPA variant extension subfield is any value within a first value range, it indicates that the NDPA variant extension subfield is set to a validate (Validate) state.

Optionally, in the foregoing two designs, when a value of the NDPA variant extension subfield is any value within a first value range, it indicates that the NDPA variant extension subfield is set to a validate (Validate) state. The parsing unit 22 is specifically configured to: when obtaining, through parsing, that the NDPA variant extension subfield in the NDPA frame is in the validate state, stop parsing a field following the NDPA variant extension subfield in the NDPA frame.

Optionally, in the foregoing two designs, a length of the first field is 4*n octets, a length of the station information field is 4*m octets, both n and m are natural numbers, and m+n is greater than 0; and k is less than or equal to n-1, and q is less than or equal to m-1.

Optionally, in the foregoing two designs, n and m are determined based on the variant type indicated by the NDPA variant extension subfield in the NDPA frame.

Optionally, in the foregoing two designs, the first field or the sounding dialog token field in the NDPA frame includes first indication information and second indication information; and the first indication information indicates n, and the second indication information indicates m.

Optionally, in the foregoing two designs, first two octets in the first field include an association identifier field, and a value of the association identifier field is greater than 2007, and k is a natural number greater than or equal to 1.

Optionally, in the foregoing two designs, the communication apparatus 2 further includes an obtaining unit 23. The transceiver unit 21 is further configured to receive a sounding PPDU. The obtaining unit 23 is configured to obtain channel state information based on the sounding PPDU. The transceiver unit 21 is further configured to send a beamforming report, where the beamforming report carries the channel state information.

Optionally, in the foregoing two designs, the sounding PPDU includes a universal signal U-SIG field, a physical layer version indication subfield included in the U-SIG field indicates a physical layer version of the sounding PPDU, and the physical layer version of the sounding PPDU is consistent with the variant type indicated by the NDPA variant extension subfield in the NDPA frame.

The parsing unit 22 and the obtaining unit 23 may be integrated into one unit, for example, a processing unit.

It should be understood that the communication apparatus 2 may correspondingly perform the foregoing embodiment, and the foregoing operations or functions of the units in the communication apparatus 2 are separately used to implement corresponding operations of the beamformee in the foregoing embodiment. For brevity, details are not described herein again.

The foregoing describes the beamformer and the beamformee in embodiments of this application. The following describes possible product forms of the beamformer and the beamformee. It should be understood that any product having the functions of the beamformer described in FIG. 15 and any product having the functions of the beamformee described in FIG. 16 shall fall within the protection scope of embodiments of this application. It should be further understood that the following description is merely an example, and product forms of the AP and the STA in embodiments of this application are not limited thereto.

In a possible product form, the beamformer and the beamformee in embodiments of this application may be implemented in a general bus architecture.

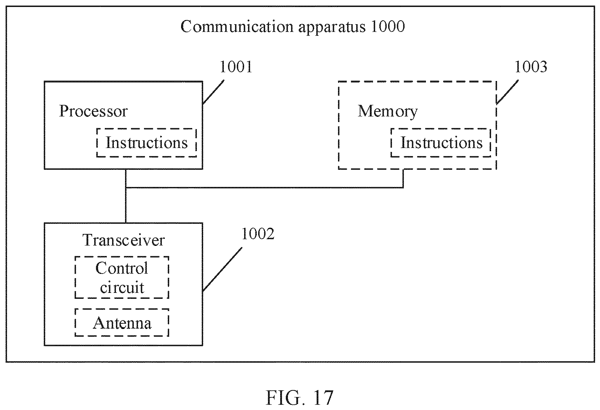

For ease of description, FIG. 17 is a schematic diagram of a structure of a communication apparatus 1000 according to an embodiment of this application. The communication apparatus 1000 may be a beamformer and a beamformee, or a chip thereof. FIG. 17 shows only main components in the communication apparatus 1000. In addition to a processor 1001 and a transceiver 1002, the communication apparatus may further include a memory 1003 and an input/output apparatus (not shown in the figure).

The processor 1001 is mainly configured to process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to perform conversion between a baseband signal and a radio frequency signal and process the radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process data of the software program. When data needs to be sent in a wireless manner, the processor 1001 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

In a design, the communication apparatus 1000 may be configured to perform the function of the beamformer in the foregoing embodiment. The processor 1001 may be configured to perform step S101 in FIG. 10, and/or configured to perform another process of the technology described in this specification. The transceiver 1002 may be configured to perform steps S102 and S105 in FIG. 10, and/or configured to perform another process of the technology described in this specification.

In another design, the communication apparatus 1000 may be configured to perform the function of the beamformee in the foregoing embodiment. The processor 1001 may be configured to perform step S104 and step S106 in FIG. 10, and/or configured to perform another process of the technology described in this specification. The transceiver 1002 may be configured to perform step S103 and step S107 in FIG. 10, and/or configured to perform another process of the technology described in this specification.

In any one of the foregoing designs, the processor 1001 may store instructions. The instructions may be a computer program. The computer program is run on the processor 1001, so that the communication apparatus 1000 can perform the method described in any one of the foregoing method embodiments. The computer program may be fixed in the processor 1001, and in this case, the processor 1001 may be implemented by hardware.

In an implementation, the communication apparatus 1000 may include a circuit, and the circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 17. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, like a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

In a possible product form, the beamformer and the beamformee in embodiments of this application may be implemented by a general-purpose processor

The general-purpose processor implementing the beamformer includes a processing circuit and an input/output interface in communication connection to the processing circuit.

The general-purpose processor may be configured to perform the function of the beamformer in the foregoing embodiment. Specifically, the processing circuit may be configured to perform step S101 in FIG. 10, and/or another process of the technology described in this specification. The input/output interface may be configured to perform steps S102 and S105 in FIG. 10, and/or another process of the technology described in this specification.

The general-purpose processor implementing the beamformee includes a processing circuit and an input/output interface in communication connection to the processing circuit.

The general-purpose processor may be configured to perform the function of the beamformee in the foregoing embodiment. Specifically, the processing circuit may be configured to perform steps S104 and S106 in FIG. 10, and/or another process of the technology described in this specification. The input/output interface may be configured to perform steps S103 and S107 in FIG. 10, and/or another process of the technology described in this specification.

It should be understood that the communication apparatus in the foregoing various product forms has any function of the beamformer and the beamformee in the foregoing method embodiment. Details are not described herein again.

An embodiment of this application further provides a computer-readable storage medium. The computer-readable storage medium stores computer program code. When the processor executes the computer program code, an electronic device performs the method in the foregoing embodiments.

An embodiment of this application further provides a computer program product. When the computer program product runs on a computer, the computer is enabled to perform the method in the foregoing embodiments.

An embodiment of this application further provides a communication apparatus. The apparatus may exist in a product form of a chip. A structure of the apparatus includes a processor and an interface circuit. The processor is configured to perform communication with another apparatus through the interface circuit, to enable the apparatus to perform the method in the foregoing embodiments.

An embodiment of this application further provides a wireless communication system, including an AP and a STA. The AP may perform the method performed by the beamformer in the foregoing embodiments, and the STA may perform the method performed by the beamformee in the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and beneficial effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A null data packet announcement NDPA frame transmission method, comprising:
generating, by a beamformer, a null data packet announcement NDPA frame, wherein an NDPA variant field comprised in the NDPA frame is set to 00, and the NDPA frame comprises a first field and/or a station information field; and
sending, by the beamformer, the NDPA frame, wherein
the first field comprises one or more disambiguation bits, each disambiguation bit is 1, bit positions of the one or more disambiguation bits in the first field are B11+16*k, and k is a natural number; and
the station information field comprises one or more disambiguation bits, each disambiguation bit is 1, bit positions of the one or more disambiguation bits in the station information field are B27+16*q, and q is an integer greater than or equal to -1.

2. An NDPA frame transmission method, comprising:
receiving, by a beamformee, an NDPA frame, wherein an NDPA variant field comprised in the NDPA frame is set to 00, and the NDPA frame comprises a first field and/or a station information field; and
parsing, by the beamformee, the NDPA frame, wherein
the first field comprises one or more disambiguation bits, each disambiguation bit is 1, bit positions of the one or more disambiguation bits in the first field are B11+16*k, and k is a natural number; and
the station information field comprises one or more disambiguation bits, each disambiguation bit is 1, bit positions of the one or more disambiguation bits in the station information field are B27+16*q, and q is an integer greater than or equal to -1.

3. The method according to claim 1 or 2, wherein the NDPA frame comprises an NDPA variant extension subfield, and the NDPA variant extension subfield indicates a variant type of the NDPA frame.

4. The method according to claim 3, wherein the NDPA variant extension subfield is in the first field in the NDPA frame, or the NDPA variant extension subfield is in a sounding dialog token field in the NDPA frame.

5. The method according to claim 3 or 4, wherein when a value of the NDPA variant extension subfield is any value within a first value range, it indicates that the NDPA variant extension subfield is set to a validate state.

6. The method according to claim 2, wherein the NDPA frame comprises an NDPA variant extension subfield, and the NDPA variant extension subfield indicates a variant type of the NDPA frame;
when a value of the NDPA variant extension subfield is any value within a first value range, it indicates that the NDPA variant extension subfield is set to a validate state; and
the parsing, by the beamformee, the NDPA frame comprises:
when the beamformee obtains, through parsing, that the NDPA variant extension subfield in the NDPA frame is in the validate state, stopping parsing a field following the NDPA variant extension subfield in the NDPA frame.

7. The method according to any one of claims 1 to 6, wherein a length of the first field is 2*n octets, a length of the station information field is 2*m octets, both n and m are natural numbers, and m+n is greater than 0;
k is less than or equal to n-1; and
q is less than or equal to m-2.

8. The method according to claim 7, wherein n and m are determined based on the variant type indicated by the NDPA variant extension subfield in the NDPA frame.

9. The method according to claim 7, wherein the first field or the sounding dialog token field in the NDPA frame comprises first indication information and second indication information; and
the first indication information indicates n, and the second indication information indicates m.

10. The method according to any one of claims 1 to 8, wherein first two octets in the first field comprise an association identifier field, and a value of the association identifier field is greater than 2007; and
k is a natural number greater than or equal to 1.

11. The method according to claim 1, wherein the method further comprises:
sending, by the beamformer, a sounding physical layer protocol data unit PPDU; and
receiving, by the beamformer, a beamforming report, wherein the beamforming report carries channel state information.

12. The method according to claim 2, wherein the method further comprises:
receiving, by the beamformee, a sounding PPDU, and obtaining channel state information based on the sounding PPDU; and
sending, by the beamformee, a beamforming report, wherein the beamforming report carries the channel state information.

13. The method according to claim 11 or 12, wherein the sounding PPDU comprises a universal signal U-SIG field, a physical layer version indication subfield comprised in the U-SIG field indicates a physical layer version of the sounding PPDU, and the physical layer version of the sounding PPDU is consistent with the variant type indicated by the NDPA variant extension subfield in the NDPA frame.

14. A communication apparatus, comprising:
a processing unit, configured to generate a null data packet announcement NDPA frame, wherein an NDPA variant field comprised in the NDPA frame is set to 00, and the NDPA frame comprises a first field and/or a station information field; and
a transceiver unit, configured to send the NDPA frame, wherein
the first field comprises one or more disambiguation bits, each disambiguation bit is 1, bit positions of the one or more disambiguation bits in the first field are B11 + 16*k, and k is a natural number; and
the station information field comprises one or more disambiguation bits, each disambiguation bit is 1, bit positions of the one or more disambiguation bits in the station information field are B27+16*q, and q is an integer greater than or equal to -1.

15. A communication apparatus, comprising:
a transceiver unit, configured to receive an NDPA frame, wherein an NDPA variant field comprised in the NDPA frame is set to 00, and the NDPA frame comprises a first field and/or a station information field; and
a parsing unit, configured to parse the NDPA frame, wherein
the first field comprises one or more disambiguation bits, each disambiguation bit is 1, bit positions of the one or more disambiguation bits in the first field are B11 + 16*k, and k is a natural number; and
the station information field comprises one or more disambiguation bits, each disambiguation bit is 1, bit positions of the one or more disambiguation bits in the station information field are B27+16*q, and q is an integer greater than or equal to -1.

16. The communication apparatus according to claim 14 or 15, wherein the NDPA frame comprises an NDPA variant extension subfield, and the NDPA variant extension subfield indicates a variant type of the NDPA frame.

17. The communication apparatus according to claim 16, wherein the NDPA variant extension subfield is in the first field in the NDPA frame, or the NDPA variant extension subfield is in a sounding dialog token field in the NDPA frame.

18. The communication apparatus according to claim 16 or 17, wherein when a value of the NDPA variant extension subfield is any value within a first value range, it indicates that the NDPA variant extension subfield is set to a validate state.

19. The communication apparatus according to claim 15, wherein the NDPA frame comprises an NDPA variant extension subfield, and the NDPA variant extension subfield indicates a variant type of the NDPA frame;
when a value of the NDPA variant extension subfield is any value within a first value range, it indicates that the NDPA variant extension subfield is set to a validate state; and
the parsing unit is specifically configured to:
when obtaining, through parsing, that the NDPA variant extension subfield in the NDPAframe is in the validate state, stopping parsing a field following the NDPA variant extension subfield in the NDPA frame.

20. The communication apparatus according to any one of claims 16 to 19, wherein a length of the first field is 2*n octets, a length of the station information field is 2*m octets, both n and m are natural numbers, and m+n is greater than 0;
k is less than or equal to n-1; and
q is less than or equal to m-2.

21. The communication apparatus according to claim 20, wherein n and m are determined based on the variant type indicated by the NDPA variant extension subfield in the NDPA frame.

22. The communication apparatus according to claim 20, wherein the first field or the sounding dialog token field in the NDPA frame comprises first indication information and second indication information; and
the first indication information indicates n, and the second indication information indicates m.

23. The communication apparatus according to any one of claims 14 to 22, wherein first two octets in the first field comprise an association identifier field, and a value of the association identifier field is greater than 2007; and
k is a natural number greater than or equal to 1.

24. The communication apparatus according to claim 14, wherein the transceiver unit is further configured to:
send a sounding PPDU; and
receive a beamforming report, wherein the beamforming report carries channel state information.

25. The communication apparatus according to claim 15, wherein the transceiver unit is further configured to receive a sounding PPDU; and the communication apparatus further comprises an obtaining unit, configured to obtain channel state information based on the sounding PPDU; and
the transceiver unit is further configured to send a beamforming report, wherein the beamforming report carries the channel state information.

26. The communication apparatus according to claim 24 or 25, wherein the sounding PPDU comprises a U-SIG field, a physical layer version indication subfield comprised in the U-SIG field indicates a physical layer version of the sounding PPDU, and the physical layer version of the sounding PPDU is consistent with the variant type indicated by the NDPA variant extension subfield in the NDPA frame.

27. A computer-readable storage medium, wherein the computer-readable storage medium stores program instructions, and when the program instructions are run on a computer, the computer is enabled to perform the method according to any one of claims 1 to 13.

28. A computer program product comprising program instructions, wherein when the program instructions are run on a computer, the computer is enabled to perform the method according to any one of claims 1 to 13.
